# EUROPEAN PATENT APPLICATION

(11) **EP 3 965 369 A1**
(43) Date of publication of application: **09.03.2022**
(21) Application number: 21193944.2
(22) Date of filing: 31.08.2021
(51) Int. Cl.: H04L 12/18

(54) **INFORMATION PROCESSING APPARATUS, PROGRAM, AND INFORMATION PROCESSING METHOD**

(30) Priority: 02.09.2020 JP 2020147556
(71) Applicant: FUJIFILM Business Innovation Corp., Minato-ku Tokyo (JP)
(72) Inventor: TOKUCHI, Kengo, Yokohama-shi (JP)
(74) Representative: Becker, Eberhard

(57) **Abstract**

An information processing apparatus includes a processor configured to change control of a device disposed in a real space in accordance with a position of a character in a virtual space. A sharing region for sharing information between users is provided in the virtual space.

## Description

### BACKGROUND OF THE INVENTION

### (i) Field of the Invention

The present invention relates to an information processing apparatus, a program, and an information processing method.

### (ii) Description of Related Art

A technology that provides a virtual space is known.

JP2009-199198A discloses a system for performing a voice chat with another user with an avatar.

JP2002-522998A discloses a system that provides a forum to a plurality of clients capable of communicating with a computer network.

### SUMMARY OF THE INVENTION

An object of the present invention is to link a situation in a virtual space with a situation in a real space.

According to a first aspect of the present disclosure, there is provided an information processing apparatus including a processor configured to change control of a device disposed in a real space in accordance with a position of a character in a virtual space.

According to a second aspect of the present disclosure, there is provided the information processing apparatus in the first aspect, in which the processor may be configured to change control of a device of a user, which is disposed in the real space in accordance with a positional relation between a character of the user and a character of another user in the virtual space.

According to a third aspect of the present disclosure, there is provided the information processing apparatus in the first aspect, in which the processor may be configured to change control of the device of the user, which is disposed in the real space in accordance with a positional relation between a position of a sharing region for sharing information between the user and another user in the virtual space, and a position of a character of the other user in the virtual space.

According to a fourth aspect of the present disclosure, there is provided the information processing apparatus in the second or third aspect, in which the device may be a speaker of the user, and the processor may be configured to control a voice of the other user, which is emitted from the speaker in accordance with the positional relation.

According to a fifth aspect of the present disclosure, there is provided the information processing apparatus in the second or third aspect, in which the device may be a display of the user, and the processor may be configured to change an image displayed on the display in accordance with the positional relation.

According to a sixth aspect of the present disclosure, there is provided the information processing apparatus in the first aspect, in which a first character and a second character of a user may be in the virtual space, and the processor may be further configured to separately display a first sharing region and a second sharing region on a display, the first sharing region being for sharing information with another user via the first character, and the second sharing region being for sharing information with another user via the second character.

According to a seventh aspect of the present disclosure, there is provided the information processing apparatus in the first aspect, in which the processor may be further configured to display a sharing region for sharing information between users in the virtual space, on a display, and a time at which the sharing region is available is limited by a reservation.

According to an eighth aspect of the present disclosure, there is provided the information processing apparatus in the seventh aspect, in which the processor may be further configured to cause a user who uses the sharing region to automatically log in to the virtual space at a reserved time.

According to a ninth aspect of the present disclosure, there is provided the information processing apparatus in the eighth aspect, in which the processor may be further configured to move the character to the sharing region in the virtual space after logging in.

According to a tenth aspect of the present disclosure, there is provided the information processing apparatus in the first aspect, in which the processor may be further configured to display a sharing region for sharing information between users in the virtual space, on a display, and the number of users capable of using the sharing region may be limited by a reservation.

According to an eleventh aspect of the present disclosure, there is provided the information processing apparatus in the first aspect, in which the processor may be further configured to display a sharing region for sharing information between users in the virtual space, on a display, and a sender who has sent information to be shared may be notified of information on a sharer who has shared the information.

According to a twelfth aspect of the present disclosure, there is provided the information processing apparatus in the first aspect, in which the processor may be further configured to display a sharing region for sharing information between users in the virtual space, on a display, and a period in which only acquisition of information through the sharing region is permitted may be defined.

According to a thirteenth aspect of the present disclosure, there is provided the information processing apparatus in the first aspect, in which the processor may be further configured to display a sharing region for sharing information between users in the virtual space, on a display, and the number of times of sharing information through the sharing region may be determined.

According to a fourteenth aspect of the present disclosure, there is provided a program causing a computer to execute a process including changing control of a device disposed in a real space in accordance with a position of a character in a virtual space.

According to a fifteenth aspect of the present disclosure, there is provided an information processing method including changing control of a device disposed in a real space in accordance with a position of a character in a virtual space.

According to the first, fourteenth, and fifteenth aspects of the present invention, it is possible to link a situation in a virtual space with a situation in a real space.

According to the second aspect of the present invention, it is possible to link a positional relation between characters in the virtual space with the situation in the real space.

According to the third aspect of the present invention, it is possible to link a positional relation between a character and a sharing region in the virtual space with the situation in the real space.

According to the fourth aspect of the present invention, it is possible to link a positional relation in the virtual space with a sound emitted from a speaker installed in the real space.

According to the fifth aspect of the present invention, it is possible to link the positional relation in the virtual space with an image displayed on a display installed in the real space.

According to the sixth aspect of the present invention, it is possible to operate a plurality of characters in the virtual space to transmit and receive information to and from another user.

According to the seventh aspect of the present invention, it is possible to use the sharing region at a reserved time.

According to the eighth aspect of the present invention, it is possible to log in to the virtual space at the reserved time even though a user does not perform an operation for logging in.

According to the ninth aspect of the present invention, it is possible to use the sharing region in the virtual space even though the user does not operate the character.

According to the tenth aspect of the present invention, the reserved user can use the sharing region.

According to the eleventh aspect of the present invention, a sender can recognize who has shared information.

According to the twelfth aspect of the present invention, it is possible to acquire information via the sharing region within a predetermined period.

According to the thirteenth aspect of the present invention, it is possible to acquire information via the sharing region only a predetermined number of times.

### BRIEF DESCRIPTION OF THE DRAWINGS

Exemplary embodiment(s) of the present invention will be described in detail based on the following figures, wherein:
Fig. 1 is a block diagram illustrating a configuration of an information processing system according to a first exemplary embodiment;
Fig. 2 is a block diagram illustrating a configuration of a server according to the first exemplary embodiment;
Fig. 3 is a block diagram illustrating a configuration of a terminal device according to the first exemplary embodiment;
Fig. 4 is a schematic diagram illustrating a device disposed in a real space;
Fig. 5 is a diagram illustrating a screen;
Fig. 6 is a diagram illustrating a screen;
Fig. 7 is a diagram illustrating a reservation management table;
Fig. 8 is a diagram illustrating a screen;
Fig. 9 is a diagram illustrating a screen;
Fig. 10 is a schematic diagram illustrating a device disposed in the real space;
Fig. 11 is a schematic diagram illustrating a device disposed in the real space;
Fig. 12 is a diagram illustrating a screen;
Fig. 13 is a diagram illustrating a screen;
Fig. 14 is a diagram illustrating a screen;
Fig. 15 is a diagram illustrating a screen;
Fig. 16 is a block diagram illustrating a configuration of an information processing system according to a second exemplary embodiment;
Fig. 17 is a block diagram illustrating a configuration of a server according to the second exemplary embodiment;
Fig. 18 is a block diagram illustrating a configuration of a terminal device according to the second exemplary embodiment;
Fig. 19 is a diagram illustrating a screen;
Fig. 20 is a flowchart illustrating a processing flow according to the second exemplary embodiment;
Fig. 21 is a diagram illustrating a type of content;
Fig. 22 is a diagram illustrating transmission and reception of contents;
Fig. 23 is a diagram illustrating a screen; and
Fig. 24 is a diagram illustrating a screen.

### DETAILED DESCRIPTION OF THE INVENTION

### <First Exemplary Embodiment>

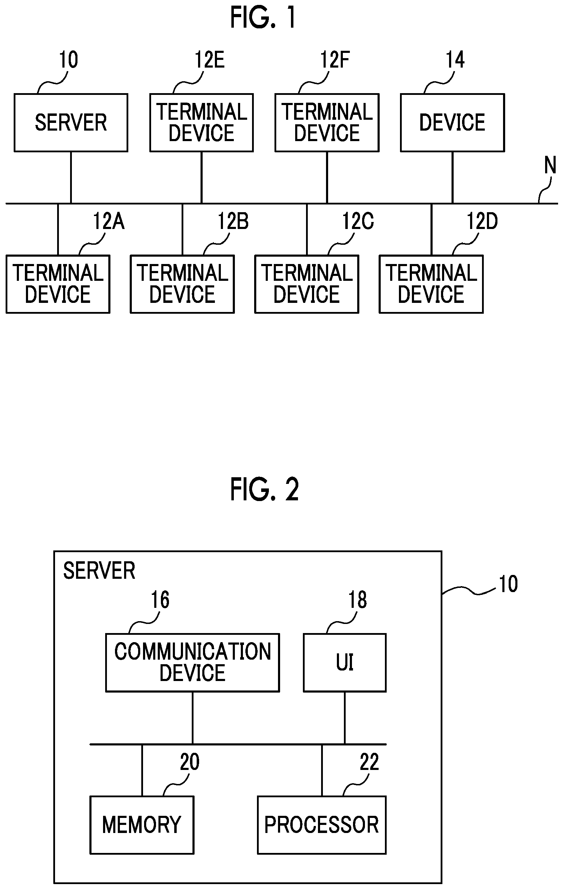

An information processing system according to a first exemplary embodiment will be described with reference to Fig. 1. Fig. 1 illustrates an example of the configuration of the information processing system according to the first exemplary embodiment.

The information processing system according to the first exemplary embodiment includes a server 10, one or a plurality of terminal devices, and one or a plurality of devices 14, as an example. In the example illustrated in Fig. 1, the information processing system according to the first exemplary embodiment includes terminal devices 12A, 12B, 12C, 12D, 12E, and 12F. The number of terminal devices illustrated in Fig. 1 is just an example. One or a plurality of terminal devices may be included in the information processing system according to the first exemplary embodiment. In the following description, it is assumed that the terminal devices 12A, 12B, 12C, 12D, 12E, and 12F are referred to as a "terminal device 12" so long as it is not required to distinguish the terminal devices 12A, 12B, 12C, 12D, 12E, and 12F from each other. The information processing system according to the first exemplary embodiment may include other devices other than the server 10, the terminal device 12, and the device 14.

The server 10, each of the terminal devices 12, and the device 14 have a function of communicating with other devices. The communication may be a wired communication using a cable or a wireless communication. That is, each of the devices may be physically connected to another device by a cable to transmit and receive information, or may transmit and receive information by wireless communication. As the wireless communication, for example, short-range wireless communication, Wi-Fi (registered trademark), or the like is used. The wireless communication of standards other than the above description may be used. The short-range wireless communication includes, for example, Bluetooth (registered trademark), a radio frequency identifier (RFID), NFC, and the like. For example, each of the devices may communicate with another device via a communication path N such as a local area network (LAN) or the Internet.

The server 10 provides a service that realizes a virtual space. For example, the server 10 provides a service for causing users to transmit and receive information to and from each other in a virtual space.

The virtual space has a concept that is contrasted with the real space. For example, a virtual space realized by a computer, a virtual space formed on a network such as the Internet, a virtual space realized by a virtual reality (VR) technology, a cyber space, or the like may be provided. For example, a virtual three-dimensional space or a virtual two-dimensional space corresponds to an example of the virtual space. The server 10 may provide services such as Web conference, online conference, remote conference, and video conference, which are used in the virtual space. A user may transmit and receive information to and from another user by using the service. The server 10 may construct, for example, a system referred to as a web conference system, an online conference system, a remote conference system, or a video conference system. A service for transmitting and receiving information by such a system is also included in the category of the concept of the service for transmitting and receiving information in the virtual space according to the first exemplary embodiment. The server 10 may provide a social network service (SNS) used in the virtual space.

The information transmitted and received in the virtual space is, for example, image data (for example, still image data or moving image data), data (for example, document data) representing a text string such as a message or comment, sound data including music data, or a combination of pieces of the above data.

The server 10 stores and manages account information of a user who uses the virtual space. The account information refers to information for logging in to a service that provides a virtual space to use the virtual space. For example, the account information refers to information including a user ID and a password. For example, the account information is transmitted to the server 10 to log in to the service, and thereby a user associated with the account information is permitted to use the virtual space.

The terminal device 12 is, for example, a personal computer (referred to as a "PC" below), a tablet PC, a smartphone, a portable phone, or the like. The terminal device 12 is used when the user uses the virtual space. For example, in a case where the account information is input to the terminal device 12, the account information is transmitted to the server 10, and the user logs in to the service that provides the virtual space.

In the present exemplary embodiment, users A, B, C, D, E, and F use own terminal devices 12. For example, the terminal device 12A is used by the user A, the terminal device 12B is used by the user B, and the terminal device 12C is used by the user C. The same is applied to other users.

The account information of each of the users A, B, C, D, E, and F is stored in the server 10 and managed by the server 10. That is, the users A, B, C, D, E, and F are registered in the service provided by the server 10.

For example, the user A uses the terminal device 12A to log in to the service that provides the virtual space, and thus is permitted to use the virtual space. The same is applied to other users. A plurality of users may operate one identical terminal device 12 to log in to the service that provides the virtual space and use the virtual space . For example, the users A and B may operate the identical terminal device 12A to log in to the service and use the virtual space.

The device 14 is not particularly limited. Examples of the device include a speaker, a display, a PC, a tablet PC, a smartphone, a portable phone, a robot (humanoid robot, a non-human animal robot, other robots, and the like), a printer, a scanners, a multifunction device, a projector, a recording device, a reproducing device, an image pickup device such as a camera, a refrigerator, a rice cooker, a microwave oven, a coffee maker, a vacuum cleaner, a washing machine, an air conditioner, a lighting device, a watch, an automobile, a motorcycle, an aircraft (for example, unmanned aircraft such as a drone), a game machine, or various sensing devices (for example, temperature sensor, humidity sensor, voltage sensor, and current sensor). The device 14 may be referred to as an information device, a video device, or a sound device.

The hardware configuration of the server 10 will be described below with reference to Fig. 2. Fig. 2 illustrates an example of the hardware configuration of the server 10.

The server 10 includes, for example, a communication device 16, a UI 18, a memory 20, and a processor 22.

The communication device 16 is a communication interface including a communication chip, a communication circuit, and the like. The communication device 16 has a function of transmitting information to another device and a function of receiving information from another device. The communication device 16 may have a wireless communication function or a wired communication function. The communication device 16 may communicate with another device by using, for example, short-range wireless communication, or may communicate with another device via the communication path N.

The UI 18 is a user interface and includes at least one of a display and an operation device. The display is a display device such as a liquid crystal display or an EL display. The operation device is a keyboard, an input key, an operation panel, or the like. The UI 18 may be a UI such as a touch panel having both a display and an operation device.

The memory 20 is a device that forms one or a plurality of storage regions for storing various types of information. Examples of the memory 20 include a hard disk drive, various types of memory (for example, RAM, DRAM, and ROM), other storage devices (for example, optical disk), or a combination thereof. One or a plurality of memories 20 are included in the server 10.

For example, the memory 20 stores account information of a user who is permitted to use the virtual space. The account information of the user who is permitted to use the virtual space may be stored in a device other than the server 10 (for example, authentication server). A user having an intention of logging in may be authenticated by an apparatus such as an authentication server, and the server 10 may permit the user who has successfully authenticated to use the virtual space.

The processor 22 is configured to control the operations of the units of the server 10. The processor 22 may include a memory.

In the first exemplary embodiment, the processor 22 provides a service that realizes a virtual space. For example, the processor 22 provides a service for causing users to transmit and receive information to and from each other in a virtual space.

A time slot in which information is permitted to be transmitted and received in the virtual space, a user, the number of users, a group to which a plurality of users belong, or the like may be determined. For example, the processor 22 may permit users belonging to the identical group to transmit and receive information to and from each other, and may not permit users belonging to different groups to transmit and receive information to and from each other.

The processor 22 may also provide a character allowed to be operated by the user in the virtual space. The character is associated with the user who uses the virtual space, and the user is capable of operating the own character in the virtual space. For example, the character is used to transmit and receive information to and from other users. The user may move the own character in the virtual space, cause the own character to speak, or move the own character in accordance with the movement of the user in the real space. In a case where a plurality of users (for example, users A and B) operate the identical terminal device 12 (for example, terminal device 12A) to use the virtual space, the users A and B performs switching of the own characters to operate the own character.

The processor 22 may set a sharing region for sharing information between a plurality of users in the virtual space. A user is capable of transmitting and receiving information to and from other users via the sharing region.

For example, in a case where the virtual space is a virtual three-dimensional space, the sharing region has a two-dimensional or three-dimensional size. The size of the sharing region may be predetermined, may be changed by the user, or may be changed by an administrator who has the authority to change.

The time slot, the user, the number of users, the group, and the like, which are permitted to use the sharing region may be determined. For example, a sharing region is set for each group, and the processor 22 permits a plurality of users belonging to the identical group to transmit and receive information to and from each other via the sharing region of the group. A sharing region may be set by the user, and the user and another user permitted by the user may be permitted to transmit and receive information to and from each other via the sharing region.

The processor 22 may control a control target. The control target is, for example, the device 14. The device 14 is disposed in the real space, and the processor 22 changes the control of the device 14 in accordance with the position of the character in the virtual space. The processor 22 may change the control of the device 14 of the user in accordance with a positional relation between the character of the user and a character of another user in the virtual space. For example, the processor 22 controls an output of the device 14 to change the output of the device 14. The processor 22 may control hardware (for example, terminal device 12) other than the device 14.

The control target may be software. The software as the control target may be software installed on the device 14, or may be software installed on a device other than the device 14 (for example, another server, or terminal device 12). The control target may be a combination of hardware (for example, device 14) and software.

An automatic response partner such as a chatbot may use the virtual space. The user may transmit and receive information to and from the automatic response partner in the virtual space. For example, the automatic response partner functions as a response assistant that responds to an inquiry of the user. Thus, the automatic response partner may receive statement of the user in the virtual space, analyze contents of the statement, create a response and the like to the statement, and then notify the user of the created response. The automatic response partner is realized, for example, by executing a program. The program is stored in, for example, the server 10 or another device (for example, another server, terminal device 12, and device 14). The automatic response partner may be implemented by artificial intelligence (AI). Any algorithm used for the artificial intelligence may be provided. The sharing region may be set by the automatic response partner, and a user permitted to transmit and receive information to and from the automatic response partner transmits and receives information to and from the automatic response partner or another user via the sharing region.

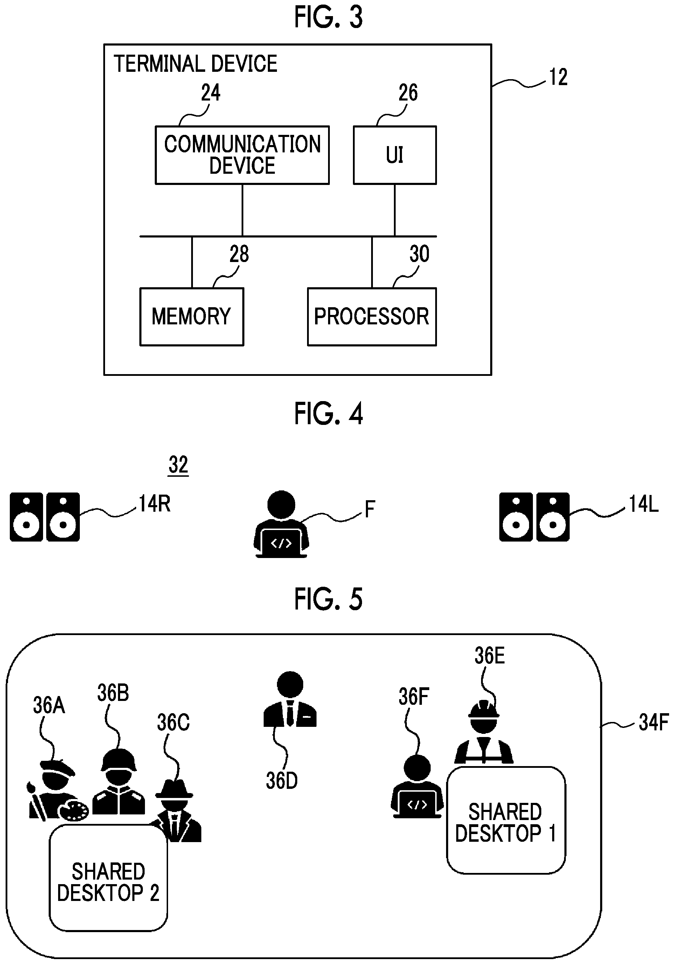

The hardware configuration of the terminal device 12 will be described below with reference to Fig. 3. Fig. 3 illustrates an example of the hardware configuration of the terminal device 12.

The terminal device 12 includes, for example, a communication device 24, a UI 26, a memory 28, and a processor 30.

The communication device 24 is a communication interface including a communication chip, a communication circuit, and the like. The communication device 24 has a function of transmitting information to another device and a function of receiving information transmitted from another device. The communication device 24 may have a wireless communication function or a wired communication function. The communication device 24 may communicate with another device by using, for example, short-range wireless communication, or may communicate with another device via the communication path N.

The UI 26 is a user interface and includes at least one of a display and an operation device. The display is a display device such as a liquid crystal display or an EL display. The operation device is a keyboard, an input key, an operation panel, or the like. The UI 26 may be a UI such as a touch panel having both a display and an operation device. The UI 26 may include a microphone and a speaker.

The memory 28 is a device that forms one or a plurality of storage regions for storing various types of information. Examples of the memory 28 include a hard disk drive, various types of memory (for example, RAM, DRAM, and ROM), other storage devices (for example, optical disk), or a combination thereof. One or a plurality of memories 28 are included in the terminal device 12.

The processor 30 is configured to control the operations of the units of the terminal device 12. The processor 30 may include a memory.

For example, the processor 30 displays an image representing the inside of the virtual space on the display of the terminal device 12. Specifically, the processor 30 displays an image of the character in the virtual space on the display, or displays an image representing the sharing region set in the virtual space, on the display.

Examples of the first exemplary embodiment will be described below. The processor 22 in the server 10 or the processor 30 of the terminal device 12 may execute processing according to examples in the first exemplary embodiment. Alternatively, the processor 22 and the processor 30 may cooperate with each other to execute processing according to the examples in the first exemplary embodiment. A portion of certain processing may be executed by the processor 22, and another portion of the processing may be executed by the processor 30. The server 10, the terminal device 12, or a combination thereof corresponds to an example of the information processing apparatus according to the first exemplary embodiment.

### (Example 1 of First Exemplary Embodiment)

Example 1 of the first exemplary embodiment will be described below.

For example, users A, B, C, D, E, and F use the own terminal devices 12 to log in to the virtual space and use the virtual space.

Here, as an example, processing according to Example 1 will be described focusing on the user F. Fig. 4 illustrates an example of the device 14 disposed around the user F. For example, devices 14R and 14L are speakers, displays, or a combination thereof disposed in the real space 32. The devices 14R and 14L may be devices other than the above devices. The device 14R is disposed on the right side of the user F, and the device 14L is disposed on the left side of the user F. For example, information indicating the positional relation between each device 14 and the user F is registered in advance in the server 10. Specifically, information indicating that the device 14R is disposed on the right side of the user F and information indicating that the device 14L is disposed on the left side of the user F are registered in advance in the server 10. Information indicating the distance between the user F and each of the devices 14R and 14L may be registered in the server 10. The pieces of information are associated with the account information of the user F and are stored in the memory 20 of the server 10. The devices 14R and 14L may be connected to the terminal device 12F, or may be connected to the server 10 without being connected to the terminal device 12F.

For example, information such as a voice, a text string, and an image may be transmitted and received between users who use the virtual space. Describing the user F, in a case where a user other than the user F emits a voice, the terminal device 12 or the microphone of the user who emits the voice collects the voice. The voice data is transmitted from the terminal device 12 of the user who emits the voice to the terminal device 12F via the server 10. Alternatively, the voice data is transmitted to the devices 14R and 14L being speakers via the server 10, and thus a voice is emitted from the devices 14R and 14L. The same is applied to other users. Since the user is photographed by the camera provided in the terminal device 12 or another camera, image data representing the user is generated. The image data is transmitted from the terminal device 12 of the user to the terminal device 12F via the server 10, or is transmitted to the devices 14R and 14L being displays via the server 10. Thus, an image is displayed on the devices 14R and 14L.

The processor 22 in the server 10 may set a time slot in which information such as a voice, a text string, and an image is transmitted and received. The time slot may be changed by the user. In a case where such a time slot is set, the processor 22 generates sound from the devices 14R and 14L and displays an image on the devices 14R and 14L, only in the time slot. Such a time slot may be set for each user. In this case, for the device 14 of the user for which such a time slot is set, the output of a voice or an image is limited to the time slot.

Fig. 5 illustrates a screen 34F. The screen 34F is a screen displayed on the display of the terminal device 12F used by the user F. An image representing the inside of the virtual space is displayed on the screen 34F. For example, an image of a character associated with a user who uses the virtual space, information indicating the statement of the user, and the like are displayed on the screen 34F.

As described above, since the users A, B, C, D, E, and F use the virtual space, the characters of the users A, B, C, D, E, and F are in the virtual space. A character image being an image representing the character of each user is displayed on the screen 34F. A character image 36A is an image of the character of the user A. A character image 36B is an image of the character of the user B. A character image 36C is an image of the character of the user C. A character image 36D is an image of the character of the user D. A character image 36E is an image of the character of the user E. A character image 36F is an image of the character of the user F.

The position of each character image on the screen 34F corresponds to the position of each character in the virtual space. For example, the virtual space is a virtual three-dimensional space, and the position of each character image corresponds to the position of each character in the virtual three-dimensional space. Specifically, the positional relation (for example, distance between the character images and directional relation between the character images) between the character images on the screen 34F corresponds to the positional relation (for example, distance between the characters in the virtual space and directional relation between the characters) between the characters in the virtual space. As the character is located at a position corresponding to the more front side of the screen 34F in the virtual space, the character image representing the character is displayed more largely. As the character is located at a position corresponding to the more back side of the screen 34F in the virtual space, the character image representing the character is displayed smaller.

A screen similar to the screen 34F is displayed on each of the displays of the terminal devices 12A, 12B, 12C, 12D, and 12E.

The user F may operate terminal device 12F to operate the own character in the virtual space. For example, the user F may move the own character in a virtual three-dimensional space, or cause the own character to perform an action in accordance with the movement of the user F. The same is applied to other users.

For example, the processor 22 in the server 10 specifies the positional relation between the characters in the virtual space, and transmits information indicating the specified positional relation to each terminal device 12. The processor 30 in each terminal device 12 displays each character image on the screen in accordance with the positional relation between the characters.

In the example illustrated in Fig. 5, shared desktops 1 and 2 are set in the virtual space. For example, the shared desktops 1 and 2 refer to regions having a two-dimensional or three-dimensional size in the virtual space. The shared desktops 1 and 2 may be set by the user, may be set by the administrator, or may be set in advance. In Example 1 in the first exemplary embodiment, as an example, the shared desktop 1 is set by the user F, and the shared desktop 2 is set by another user other than the user F. For example, in a case where the processor 22 receives an instruction to set a shared desktop, from the user, the processor 22 in the server 10 forms the shared desktop in the virtual space.

Images (for example, icons) representing the shared desktops 1 and 2 are displayed on the screen 34F. The shared desktops 1 and 2 are an example of the sharing region. The information posted or transmitted to the shared desktop is displayed on the terminal device 12 of the user who is permitted to share the information using the shared desktop, and is not displayed on the terminal device 12 of a user who is not permitted to use the shared desktop and share information.

For example, the users E and F are permitted to share information using the shared desktop 1. The users A, B, and C are permitted to share information using the shared desktop 2.

The information posted or transmitted to the shared desktop 1 is transmitted to the terminal devices 12E and 12F, but is not transmitted to the terminal device 12 of another user. For example, in a case where the user F operates the terminal device 12F, and thus an image (for example, an icon) associated with data such as image data, text data, and voice data is superimposed on the image of the shared desktop 1 on the screen 34F, the data associated with the superimposed icon is transmitted to the terminal device 12E from the terminal device 12F via the server 10. In a case where the transmitted data is image data or text data, the image or the text is displayed on the display of the terminal device 12E. In a case where the transmitted data is voice data, music data is reproduced by the terminal device 12E. The same is applied to a case where the user E transmits the data. The same is applied to the shared desktop 2. The image may be displayed on the device 14 being a display, or the sound may be emitted from the device 14 being a speaker.

For example, a user permitted by the administrator may be permitted to share information using the shared desktop 1. A user permitted by the user (for example, user F) who has set the shared desktop 1 may be permitted to share information using the shared desktop 1. A predetermined user may be permitted to share information using the shared desktop 1. The same is applied to the shared desktop 2. The permission is given by the processor 22 in the server 10.

As another example, in a case where the character image is displayed on the screen 34F within a range where the distance from the image representing the shared desktop 1 is equal to or less than a threshold value, the processor 22 in the server 10 may permit the user associated with the character image to share information with another user by using the shared desktop 1. In this case, in a case where the shared desktop 1 is set by the user F, and the permission of the user F is required to share the information using the shared desktop 1, the user permitted by the user F may be permitted to share information by using the shared desktop 1. The threshold value may be predetermined or may be changed by the user (for example, user F who has set the shared desktop 1). Even in a case where the character image of the user permitted to share information by using the shared desktop 1 is displayed outside the above range on the screen 34F, the processor 22 in the server 10 may permit the user to share information by using the shared desktop 1. On the contrary, the processor 22 in the server 10 may not permit the user to share information by using the shared desktop 1. The same is applied to the shared desktop 2.

As still another example, in a case where the character is disposed within a range where a distance from the position at which the shared desktop 1 is disposed is equal to or less than the threshold value in the virtual space, the processor 22 in the server 10 may permit the user associated with the character to share information with another user by using the shared desktop 1. In this case, the user permitted by the user F may also be permitted to share information by using the shared desktop 1. The threshold value may be predetermined or may be changed by the user (for example, user F who has set the shared desktop 1). Even in a case where the character of the user permitted to share information by using the shared desktop 1 is disposed outside the above range in the virtual space, the processor 22 in the server 10 may permit the user to share information by using the shared desktop 1. On the contrary, the processor 22 in the server 10 may not permit the user to share information by using the shared desktop 1. The same is applied to the shared desktop 2.

As still yet another example, in a case where the shared desktop 1 is set by the user F, and the character image is displayed on the screen 34F within a range where the distance from the character image 36F of the user F is equal to or less than a threshold value, the processor 22 in the server 10 may permit the user associated with the character image to share information by using the shared desktop 1. In this case, the user permitted by the user F may also be permitted to share information by using the shared desktop 1. The threshold value may be predetermined or may be changed by the user F. Even in a case where the character image of the user permitted to share information by using the shared desktop 1 is displayed outside the above range on the screen 34F, the processor 22 in the server 10 may permit the user to share information by using the shared desktop 1. On the contrary, the processor 22 in the server 10 may not permit the user to share information by using the shared desktop 1. The same is applied to the shared desktop 2.

As still yet another example, in a case where the shared desktop 1 is set by the user F, and the character is disposed within a range where a distance from the character of the user F is equal to or less than a threshold value in the virtual space, the processor 22 in the server 10 may permit the user associated with the character to share information by using the shared desktop 1. In this case, the user permitted by the user F may also be permitted to share information by using the shared desktop 1. The threshold value may be predetermined or may be changed by the user F. Even in a case where the character of the user permitted to share information by using the shared desktop 1 is disposed outside the above range in the virtual space, the processor 22 in the server 10 may permit the user to share information by using the shared desktop 1. On the contrary, the processor 22 in the server 10 may not permit the user to share information by using the shared desktop 1. The same is applied to the shared desktop 2.

In Example 1, the processor 22 in the server 10 changes the control of the device 14 disposed in the real space in accordance with the position of the character in the virtual space. For example, the processor 22 change the control of the device 14 of the user, which is disposed in the real space in accordance with the positional relation between the character of the user and the character of another user in the virtual space. This processing will be described below in detail with a specific example.

For example, the processor 22 in the server 10 changes the control of the devices 14R and 14L of the user F, which are disposed in the real space, in accordance with the position of the character of the user F in the virtual space.

Specifically, the processor 22 changes the sound volume of the devices 14R and 14L, which are speakers, in accordance with the positional relation between the character of the user F and the character of another user in the virtual space. For example, in the virtual space, the upward direction, the downward direction, the forward direction, the rearward direction, the rightward direction, and the leftward direction are determined by using the position of the character as a reference. In a case where the user (for example, user E) associated with the character disposed on the left side of the character of the user F in the virtual space emits a voice, the processor 22 causes the voice to be emitted from the device 14L being a speaker on the left side. The processor 22 may cause the voice to be emitted from both the device 14R being a speaker on the right side and the device 14L being the speaker on the left side. In this case, the processor 22 sets the sound volume of the device 14L to be louder than the sound volume of the device 14R.

The processor 22 in the server 10 may cause the voice of the user (for example, user E) permitted to share information with the user F by using the shared desktop 1 to be emitted from the devices 14R and 14L of the user F. The processor 22 may cause the voice of the user associated with the character of which the distance from the character of the user F in the virtual space is equal to or less than a threshold value to be emitted from the devices 14R and 14L of the user F.

As another example, the processor 22 in the server 10 may change the control of the devices 14R and 14L of the user F in accordance with the positional relation between the position of the shared desktop and the position of the character of a user other than the user F in the virtual space. For example, in a case where the user associated with the character disposed on the left side of the shared desktop 1 in the virtual space emits a voice, the processor 22 in the server 10 may cause the voice to be emitted from the device 14L being the speaker on the left side. As described above, the processor 22 may change the control of the device 14 by using the position of the shared desktop as a reference.

The processor 22 may change the image displayed on the devices 14R and 14L, which are displays, in accordance with the positional relation between the character of the user F and the character of another user in the virtual space. For example, the processor 22 displays an image representing the user (for example, user E) associated with the character disposed on the left side of the character of the user F in the virtual space, on the device 14L being the display on the left side. For example, since the user E is photographed by a camera installed in the terminal device 12E or another camera, image data representing the user E is generated, and the image data is transmitted from the terminal device 12E to the server 10. Upon receiving the image data, the processor 22 in the server 10 causes the device 14L to display the image.

The processor 22 in the server 10 may cause the image representing the user (for example, user E) who is permitted to share information with the user F using the shared desktop 1 to be displayed on the device 14L being the display on the left side. The processor 22 may cause the image representing a user associated with a character whose distance between the user F and the character is equal to or less than a threshold value in the virtual space, to be displayed on the devices 14R and 14L being the displays.

As still another example, the processor 22 in the server 10 may cause the image representing the user associated with the character disposed on the left side of the shared desktop 1 in the virtual space, to be displayed on the device 14L being the display on the left side.

In the above examples, the processor 22 in the server 10 may prevent images and sounds of other users from reaching the user who is not permitted to receive the images and the sounds. For example, the processor 22 does not display an image of another user on the display of the terminal device 12 of the not-permitted user or on the device 14 being the display. The processor 22 does not cause the voice of another user to be emitted from the speaker of the terminal device 12 of the not-permitted user or from the device 14 being the speaker. The permission may be given by, for example, another user or an administrator. Since the images and the sounds of other users are not transmitted to the user who is not permitted, it is possible to prevent the images or the sounds of other users from being known to the user who is not permitted. That is, it is possible to ensure the security of the images and the sounds of other users.

The image may be displayed on the shared desktop. For example, in a case where the user F posts an image to the shared desktop 1, the processor 22 in the server 10 causes the image to be displayed on the display of the terminal device 12 of the user (for example, user E) permitted to share information with the user F by using the shared desktop 1.

In a case where the distance between the character of the user E and the shared desktop 1 in the virtual space is equal to or more than a threshold value, the processor 22 in the server 10 does not display the posted image on the display of the terminal device 12E of the user E. In a case where the distance is less than the threshold value, the processor 22 may display the posted image on the display of the terminal device 12E.

In a case where the posted image is a moving image, the processor 22 in the server 10 may control the reproduction of the moving image in accordance with the distance between the user E and the shared desktop 1 in the virtual space. For example, in a case where the distance is equal to or more than the threshold value, the processor 22 does not reproduce the moving image, and does not display the moving image on the display of the terminal device 12E of the user E. In a case where the distance is less than the threshold value, the processor 22 displays the moving image on the display of the terminal device 12E and reproduces the moving image on the display. In a case where the distance is equal to or more than the threshold value, the processor 22 may display only the representative image of the moving image on the display of the terminal device 12E, or may display only the thumbnail image of the moving image on the display of the terminal device 12E. The above distance may be the distance from the character of the user F who has posted the image.

In a case where sound is posted to the shared desktop 1, processing similar to that in a case where the image is posted may be performed. For example, in a case where the distance is equal to or more than the threshold value, the processor 22 in the server 10 may not emit the posted sound from the speaker of the terminal device 12E of the user E. In a case where the distance is less than the threshold value, the processor may emit the sound from the speaker of the terminal device 12E. As another example, in a case where the distance is equal to or more than the threshold value, the processor 22 may emit only a portion of the posted sound from the speaker of the terminal device 12E. In a case where the distance is less than the threshold value, the processor may emit the entirety of the sound from the speaker of the terminal device 12E. Even in a case where the reproduction of the entirety of the sound is permitted, the reproduction may be stopped by an instruction of the user E.

In a case where the sound or the image is shared by a user other than the sender of the sound or image, the processor 22 in the server 10 may notify the sender of user information (for example, account information and name) for identifying this user. For example, the processor 22 causes the user information to be displayed on the display of the terminal device 12 of the sender. For example, in a case where the users E and F share information such as a sound and an image via the shared desktop 1, the user F transmits information shared via the shared desktop 1. In a case where the user E shares information transmitted by the user F, the processor 22 notifies the user F being the sender who has transmitted the shared information, of user information of the user E being a co-owner who shares the information. In this case, the user information of the user E is displayed on the display of the terminal device 12F of the user F.

The processor 22 may permit only acquisition of information via the shared desktop which is the sharing region, and may determine a period (for example, a trial period) in which information is not permitted to be transmitted to the shared desktop. For example, the processor 22 in the server 10 forms a conversation group in the virtual space. The processor 22 permits users belonging to the identical conversation group to transmit and receive information such as voice and images. The processor 22 prohibits users who do not belong to this conversation group to transmit and receive information or to transmit information to this conversation group. For example, the processor 22 may form a conversation group for each shared desktop. Users belonging to the identical shared desktop may belong to the identical conversation group and may transmit and receive information to and from another user belonging to the identical conversation group via the shared desktop.

The processor 22 gives a user who has not formally participated in a conversation group, an authority (for example, authority to listen to the conversation in the conversation group) allowing only acquisition of information (for example, voice, and images) transmitted and received in the conversation group. The user who has formally participated in the conversation group has an authority to acquire information transmitted and received in the conversation group and an authority to speak to the conversation group. The authority to speak includes an authority to transmit information such as voice, images, and text strings, to users belonging to the conversation group. It is not possible for a user who has not formally participated in the conversation group to speak to the conversation group, but this user may acquire information transmitted and received in the conversation group. For example, the user who has not formally participated in the conversation group is allowed to listen to conversations in the conversation group.

For example, one or a plurality of users who are already participating in a conversation group (for example, one or a plurality of users who are already permitted to transmit and receive information by using a shared desktop), users who have formed a conversation group (for example, users who have formed a shared desktop), or users having an authority to give permission permit a user having intention to formally participate in a conversation group to formally participate in this conversation group. A user who does not formally participates in a conversation group is a user who is not permitted to formally participate in the conversation group.

The processor 22 may set a period during which only acquisition of information transmitted and received in the conversation group is permitted (for example, period during which only listening to conversations in the conversation group is permitted). Processor 22 may set such a period for users who does not formally participate in the conversation group. In this case, a user who does not formally participates in the conversation group may listen to the conversation in the conversation group only during the period, and it is not possible for such a user to listen to the conversation of the conversation group during a period other than the above set period. A user who formally participates in a conversation group may listen to the conversation in the conversation group regardless of the period, may send information to the conversation group. The period may have a length of time such as minutes, or may be a time slot, for example, a period of several minutes from some time.

The processor 22 may set the number of times of information being shared via the shared desktop. For example, the processor 22 may limit the number of times of being allowed to acquire information transmitted and received in an identical conversation group without formally participating in the conversation group (for example, number of times of being allowed to listen to the conversation in the identical conversation group) . The limitation is, for example, how many times a day the user may listen to a conversation. The processor 22 may limit the number of times of information being shared by users who formally participate in the conversation group.

### (Example 2 of First Exemplary Embodiment)

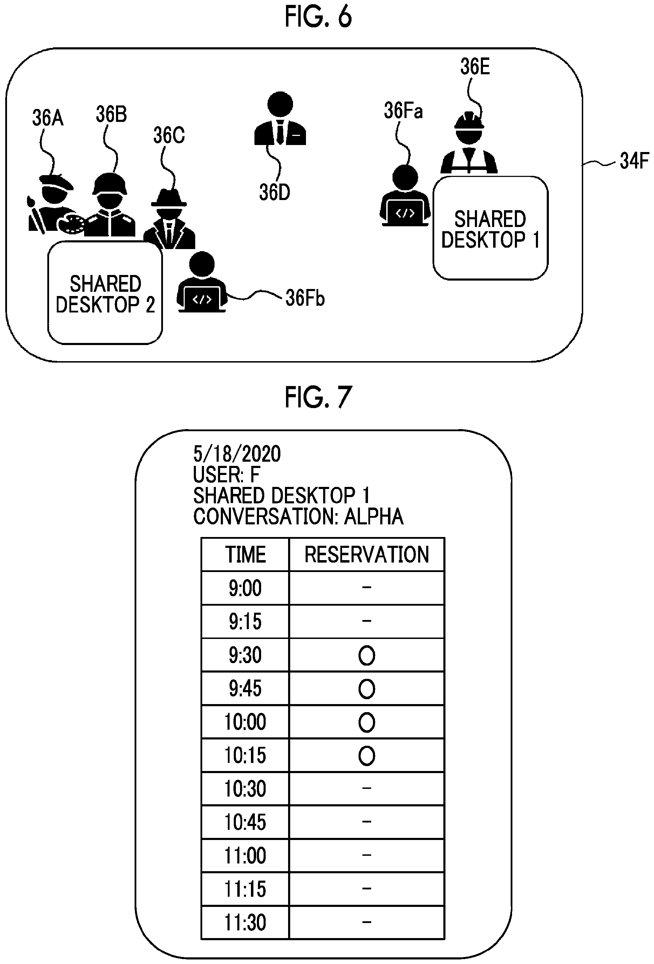

Example 2 of the first exemplary embodiment will be described below with reference to Fig. 6. Fig. 6 illustrates the screen 34F.

In Example 2 in the first exemplary embodiment, a user operates a plurality of characters in the virtual space. Here, as an example, the user F operates two characters (for example, first character and second character). That is, the first character and the second character associated with the user F are in the virtual space. For example, the processor 22 in the server 10 permits the user to operate a plurality of characters. As the number of characters allowed to be operated increases, the processor 22 may set the usage fee of the virtual space higher, or may limit the number of characters allowed to be operated.

On the screen 34F illustrated in Fig. 6, a first character image 36Fa representing the first character of the user F and a second character image 36Fb representing the second character of the user F are displayed. The user F may operate the first character and the second character separately.

For example, the first character belongs to the shared desktop 1, and the user F is permitted to use the shared desktop 1 through the first character. That is, the user F is permitted to transmit and receive information to and from another user (for example, user E) belonging to the shared desktop 1 via the shared desktop 1.

The second character belongs to the shared desktop 2, and the user F is permitted to use the shared desktop 2 via the second character. That is, the user F is permitted to transmit and receive information to and from other users (for example, users A, B, and C) belonging to the shared desktop 2 via the shared desktop 2.

The processor 22 may separate the shared desktop 1 and the shared desktop 2 and display the shared desktop 1 and the shared desktop 2 on the display of the terminal device 12F. For example, the processor 22 divides the screen 34F into two screens, displays the shared desktop 1 on one screen after the division, and displays the shared desktop 2 on the other screen after the division. As another example, the processor 22 may form a screen for displaying the shared desktop 1 and a screen for displaying the shared desktop 2 on the screen 34F to display the shared desktops 1 and 2.

### (Example 3 of First Exemplary Embodiment)

Example 3 of the first exemplary embodiment will be described below.

In Example 3 of the first exemplary embodiment, the processor 22 in the server 10 limits the time during which the shared desktop is available, by reservation.

For example, the processor 22 manages reservations for times at which the shared desktop is available. Fig. 7 illustrates a reservation management table of the shared desktop 1. The processor 22 manages the reservation for the shared desktop 1 by using the reservation management table. The data in the reservation management table is stored in, for example, the memory 20 in the server 10. The processor 22 also manages reservations for shared desktops other than the shared desktop 1 by the reservation management table.

Each user may operate the own terminal device 12 to access the server 10, designate the time to use the shared desktop, and reserve the shared desktop.

In the example illustrated in Fig. 7, the shared desktop 1 is reserved by the user F. The processor 22 permits the user F who has reserved the shared desktop 1 to use the shared desktop 1 at the reserved time. In the example illustrated in Fig. 7, since the time slot from 9:30 to 10:30 is reserved, the user F is capable of using the shared desktop 1 in the reserved time slot.

For example, the processor 22 does not form the shared desktop 1 in the virtual space outside the reserved time, and forms the shared desktop 1 at a predetermined position in the virtual space at the reserved time. The processor 22 does not display the image of the shared desktop 1 on the screen 34F outside the reserved time, but displays the image of the shared desktop 1 on the screen 34F at the reserved time. The shared desktop 1 may be formed in the virtual space even outside the reserved time. Also in this case, the processor 22 does not display the image of the shared desktop 1 on the screen 34F outside the reserved time, and displays the image of the shared desktop 1 on the screen 34F at the reserved time.

In a case where the reserved time has elapsed, the processor 22 may erase the image of the shared desktop 1 from the screen 34F, or may continue to display the image of the shared desktop 1 without erasing the image of the shared desktop 1 from the screen 34F. Even in a case where the processor 22 continues to display the image of the shared desktop 1 on the screen 34F, the processor 22 does not permit the user F to use the shared desktop 1 outside the reserved time.

A user other than the user F may be registered in the reservation management table, as a user who uses the shared desktop 1 at the reserved time. The registration is performed, for example, by the user F who has reserved the shared desktop 1. In this case, the processor 22 causes the image of the shared desktop 1 to be displayed on the display of the terminal device 12 of the registered user at the reserved time, similarly to the screen 34F. Similar to the display control of the screen 34F, in a case where the reserved time has elapsed, the processor 22 may erase the image of the shared desktop 1 from the screen, or continue to display the image of the shared desktop 1 on the screen.

The image of the shared desktop 1 may or may not be displayed on the display of the terminal device 12 of a user who is not registered in the reservation management table, at the reserved time.

The user who is not registered in the reservation management table may receive the permission from the user F to be able to use the shared desktop reserved by the user F.

The processor 22 may cause the user who has reserved the shared desktop to automatically log in to the service that provides the virtual space, at the reserved time. For example, in a case where the shared desktop 1 is reserved by the user F, and the user F is not logged in to the virtual space, the processor 22 causes the user F to automatically log in to the virtual space at the reserved time (for example, reservation start time point or predetermined time point before the reservation start time point). In a case where a user other than the user F is registered in the reservation management table as the user who uses the shared desktop 1 at the reserved time, the processor 22 may cause the user other than the user F to automatically log in to the virtual space at the reserved time.

In a case where the reserved time has elapsed, the processor 22 may cause the user who has reserved the shared desktop to automatically log out from the virtual space. The processor 22 may cause a user registered in the reservation management service as the user who uses the reserved shared desktop, to automatically log out from the virtual space.

The processor 22 may move the character of the user F to the formation position of the shared desktop 1 in the virtual space. That is, the processor 22 moves the character image 36F of the user F to the position of the image of the shared desktop 1 on the screen 34F. For example, the processor 22 moves the character image 36F to the position of the image on the shared desktop 1 after the user F logs in to the virtual space. In a case where the user other than the user F is registered in the reservation management table as the user who uses the shared desktop 1 at the reserved time, the processor 22 moves the character image of the user other than the user F to the position of the image of the shared desktop 1, similar to the user F.

The processor 22 may limit the user who is able to use the shared desktop, by reservation. In the example illustrated in Fig. 7, the processor 22 limits the user who is able to use the shared desktop 1 at the reserved time, to the user F. In a case where a user other than the user F is registered in the reservation management table as the user who uses the shared desktop 1 at the reserved time, the processor 22 limits the user who is able to use the shared desktop 1 at the reserved time, to the user F and the other users. In this case, the user F and the other users are permitted to use the shared desktop 1 at the reserved time, and other users are not permitted to use the shared desktop 1 at the reserved time.

### (Example 4 of First Exemplary Embodiment)

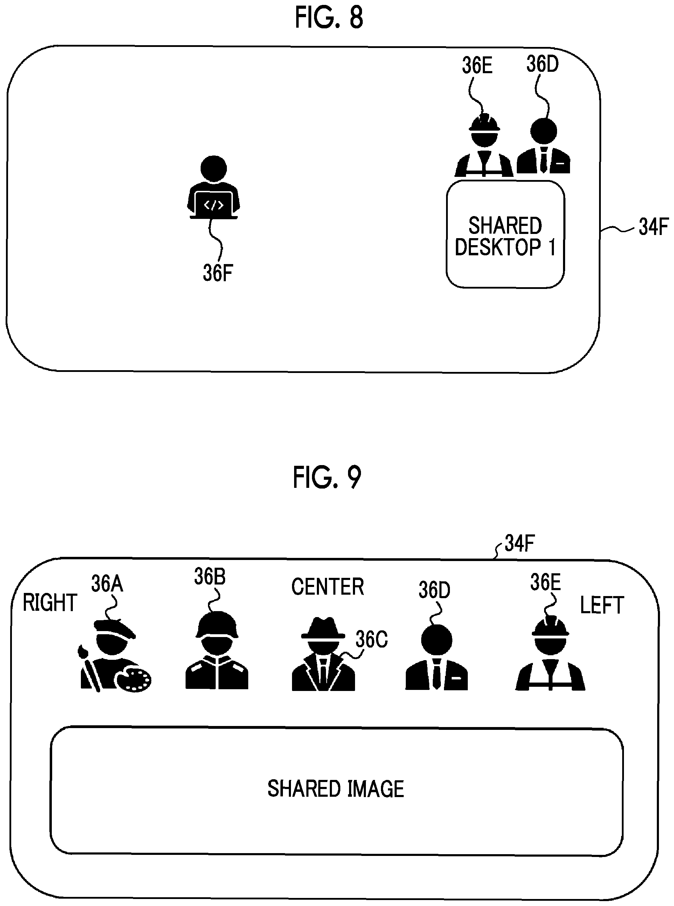

Example 4 of the first exemplary embodiment will be described below with reference to Fig. 8. Fig. 8 illustrates the screen 34F.

In the example illustrated in Fig. 8, the shared desktop 1 is formed in the virtual space. The shared desktop 1 is used by the users D and E, and the conversation group is formed by the users D and E. That is, the users D and E may transmit and receive information to and from each other via the shared desktop 1.

In this situation, in a case where the distance between the character of the user F, and the user D or the user E becomes equal to or less than the threshold value in the virtual space, the processor 22 in the server 10 permits the user F to transmit and receive information to and from the users D and E via the shared desktop 1. Thus, the user F may listen to a conversation in the conversation group formed by the users D and E, and view images transmitted and received in the conversation group. For example, the processor 22 causes the voice of the conversation in the conversation group to be emitted from the terminal device 12F, or displays the image on the display of the terminal device 12F.

The processing according to Examples 1 to 3 described above in the first exemplary embodiment may be also applied to Example 4 of the first exemplary embodiment.

### (Example 5 of First Exemplary Embodiment)

Example 5 of the first exemplary embodiment will be described below.

In Example 5 of the first exemplary embodiment, the processor 22 in the server 10 links the position of the character of the user in the virtual space with the position for outputting the voice of the user. That is, the processor 22 outputs the voice of the user associated with the character from the position or the direction in the real space, which correspond to the position of the character in the virtual space.

For example, the processor 22 in the server 10 links the position in the virtual space with the output of the speaker (for example, headphones) worn by the user or the speaker installed around the user. The processor 22 may link the position on the screen with the output of the speaker. The processor 22 may set the output of the voice for each user logged in to the virtual space, and may generate the voice of each user separately from the speaker. Even in a case where a device such as headphones, that outputs sound from the left and right sides of the user, is used, a technique of outputting sound from a pseudo 360-degree direction may be used.

A specific example of Example 5 of the first exemplary embodiment will be described below.

Fig. 9 illustrates the screen 34F. Similar to each of the examples of the first exemplary embodiment described above, users A, B, C, D, E, and F are logged in to the virtual space. In Example 5 of the first exemplary embodiment, the character image of the logged-in user is not displayed on the display of the terminal device 12 of the user. For example, as illustrated in Fig. 9, the character image of the user F is not displayed on the screen 34F. The character image of the user F may be displayed on the screen 34F as in the examples of the first exemplary embodiment described above. The same is applied to other users. A shared image, which is an image shared by the users A, B, C, D, E, and F, is displayed on the screen 34F. The shared image is displayed on the display of each of the terminal devices 12 of the users A, B, C, D, E, and F.

Although the direction of the screen depends on the direction of the character of the user F in the virtual space, in the example illustrated in Fig. 9, in a case where the character of the user F faces the front side of the screen 34F, the right side of the character of the user F in the virtual space corresponds to the right side of the screen 34F ("right" in Fig. 9), and the left side of the character of the user F in the virtual space corresponds to the left side ("left" in Fig. 9) of the screen 34F.

In the virtual space, the character of the user F is disposed at the center of the characters of the users A, B, C, D, and E. In the virtual space, the characters of the users A and B are disposed on the right side of the character of the user F. The characters of the users D and E are disposed on the left side of the character of the user F. The character of the user C is disposed in front of the character of the user A.

The character images 36A, 36B, 36C, 36D, and 36E are displayed in order from the right side to the left side of the screen 34F, and the character image 36C is displayed at the center.

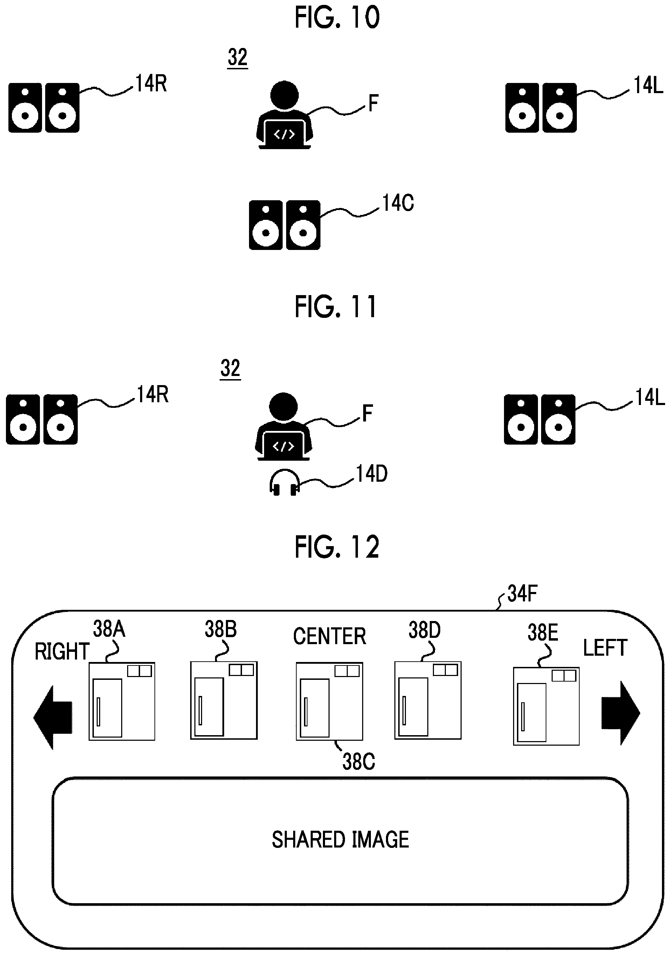

Fig. 10 illustrates an example of the device 14 disposed around the user F. The devices 14R, 14L, 14C are speakers. In the real space 32, the device 14R is disposed on the right side of the user F. The device 14L is disposed on the left side of the user F, and the device 14C is disposed in front of the user F.

The processor 22 in the server 10 emits the voices of other users (for example, users A and B) associated with the character on the right side of the character of the user F in the virtual space, from the device 14R disposed on the right side of the user F in the real space 32. The processor 22 emits the voices of other users (for example, users D and E) associated with the character on the left side of the character of the user F in the virtual space, from the device 14L on the left side of the user F in the real space 32. The processor 22 emits the voice of another user (for example, user C) associated with the character in front of the character of user F in the virtual space, from the device 14C disposed in front of the user F in the real space 32.

In this case, the processor 22 changes the volume of the voice of the other user emitted from the speaker in accordance with the distance between the character of the user F and the characters of the other users in the virtual space.

For example, the processor 22 increases the volume of the voice of another user associated with the character closer to the character of the user F in the virtual space. Specifically, the processor 22 emits the voice of the user D from the device 14L on the left side at a volume louder than the voice of the user E. For example, the voice volume of the user D is "10", and the voice volume of the user E is "9". In this manner, it is possible to obtain a sense of presence in comparison to a case where the volume is not changed in accordance with the position of the character. That is, the user has a more realistic feeling.

As another example, in the virtual space, the processor 22 sets the volume of the voice of another user associated with the character on the left side to be louder than the volume of the voice of another user associated with the character on the right side and emits the voice from the device 14L on the left side. Specifically, the processor 22 generates the voice of the user E at a volume louder than the voice of the user D from the device 14L on the left side. For example, the voice volume of the user E is "10", and the voice volume of the user D is "9". The processor 22 may not emit the voice of another user (for example, users A, B, and C) associated with the character on the right side of the character of the user D in the virtual space, from the device 14L on the left side.

Similarly, in the virtual space, the processor 22 sets the volume of the voice of another user associated with the character on the right side to be louder than the volume of the voice of another user associated with the character on the left side and emits the voice from the device 14R on the right side. Specifically, the processor 22 generates the voice of the user A at a volume louder than the voice of the user B from the device 14R on the right side. For example, the voice volume of the user A is "10", and the voice volume of the user B is "9". The processor 22 may not emit the voice of another user (for example, users C, D, and E) associated with the character on the left side of the character of the user D in the virtual space, from the device 14R on the right side.

Fig. 11 illustrates another example of the device 14 disposed in the real space 32. In the example illustrated in Fig. 11, a device 14D is disposed instead of the device 14C. The device 14D is a headphone and is attached to the head of the user F. Also in the example illustrated in Fig. 11, similarly to the example illustrated in Fig. 10, the processor 22 changes the volume of the sound emitted from each of the devices 14R, 14L, and 14C in accordance with the position of the user in the virtual space.

A virtual north, south, east, and west may be defined in the virtual space, and directions corresponding to the virtual north, south, east, and west may be defined on the screen 34F. In this case, the processor 22 in the server 10 specifies the position of the character of another user with the position (this position includes the orientation (that is, north, south, east, or west)) of the character of the user F as a reference in the virtual space. Then, the processor 22 displays the character image of the character of the other user at the position corresponding to the specified position, on the screen 34F. For example, in a case where the character of another user is on the north side of the character of the user F in the virtual space, the processor 22 displays the character image of another user at a display position on the north side of the display position of the character image of the user F on the screen 34F. The processor 22 may emit the voice of the user associated with the character on the north side of the character of the user F in the virtual space, from the speaker disposed on the north side of the user F in the real space. The same applies to other orientations.

In a case where the device 14 is a display, the processor 22 may change the image displayed on the device 14 being the display, in accordance with the positional relation between the character of the user F and the character of another user in the virtual space. For example, the processor 22 causes the device 14R being the display on the right side, to display the character image of the character of another user (for example, users A and B) on the right side of the character of the user F in the virtual space. Similarly, the processor 22 causes the characters of the characters of other users (for example, users D and E) on the left side of the character of the user F in the virtual space to display the image on the device 14L being the display on the left side.

The processor 22 may change the size of the character image displayed on the device 14 being displays, in accordance with the distance between the character of the user F and the character of another user in the virtual space.

For example, the processor 22 displays the character image of the character to become larger as a distance from the character of the user F becomes closer in the virtual space. Specifically, the processor 22 displays the character image of the user B to be larger than the character image of the user A on the device 14R being the display on the right side.

As still another example, the processor 22 may display the character image of the character on the right side to be larger than the character image of the character on the left side in the virtual space. Specifically, the processor 22 displays the character image of the user A to be larger than the character image of the user B on the device 14R being the display on the right side.

### (Example 6 of First Exemplary Embodiment)

Example 6 of the first exemplary embodiment will be described below with reference to Fig. 12. Fig. 12 illustrates the screen 34F. As illustrated in Fig. 10, in the real space, the devices 14R, 14L, and 14C, which are speakers, are arranged around the user F.

In Example 6 of the first exemplary embodiment, the processor 22 in the server 10 emits sounds generated at a place in the real space from the devices 14R, 14L, and 14C. The place is, for example, a room, an office, a shared office, or a booth. The place to which Example 6 of the first exemplary embodiment is applied may be a place other than the above description. Here, as an example, the place is a booth (for example, a private room where one or a plurality of people enter and use).

An image of each booth is displayed on the screen 34F. An image 38A is an image of a booth A. An image 38B is an image of a booth B. An image 38C is an image of a booth C, an image 38D is an image of a booth D, and an image 38E is an image of a booth E.

The processor 22 in the server 10 acquires the position information of the user F by using a global positioning system (GPS). The processor 22 may acquire the information indicating the address of the user F and recognize the address of the user F as the position of the user.

In the real space, booths A, B, C, D, and E are arranged in order from the right side of the user F based on the position of the user F (for example, the current position of the user) . The position of each booth may be determined based on the position of the user F depending on the north, south, east, and west in the real space. For example, the position information of each booth is stored in the memory 20 of the server 10 in advance. A microphone is installed in each booth, the sound in the booth is collected by the microphone, and the collected sound data is transmitted from each booth to the server 10.

The processor 22 in the server 10 generates the sound collected at the booths (for example, booths A and B) disposed on the right side of the user F from the device 14R on the right side. The processor 22 emits the sound collected at the booths (for example, booths D and E) disposed on the left side of the user F, from the device 14L on the left side. Similar to Example 5 described above, the processor 22 may change the volume of the sound emitted from the booth in accordance with the distance between the user F and the booth in the real space.

In a case where the position of the booth is specified by the orientation (for example, north, south, east, and west), the processor 22 in the server 10 may emit the sound generated in the booth from the device disposed in the orientation corresponding to the direction. For example, the processor 22 emits the sound generated in the booth installed on the north side with reference to the position of the user F, from the device 14 disposed on the north side with reference to the position of the user F. The same applies to other orientations.

In a case where the device 14 is a display, the processor 22 may display the image in each booth on the device 14. For example, a camera is installed in the booth, the inside of the booth is photographed by the camera, and image data representing the inside of the booth is transmitted to the server 10. The processor 22 displays the images in the booths A and B on the right side on the device 14R being the display on the right side. In addition, the processor 22 displays the images in the booths D and E on the left side on the device 14L being the display on the left side.

### (Example 7 of First Exemplary Embodiment)

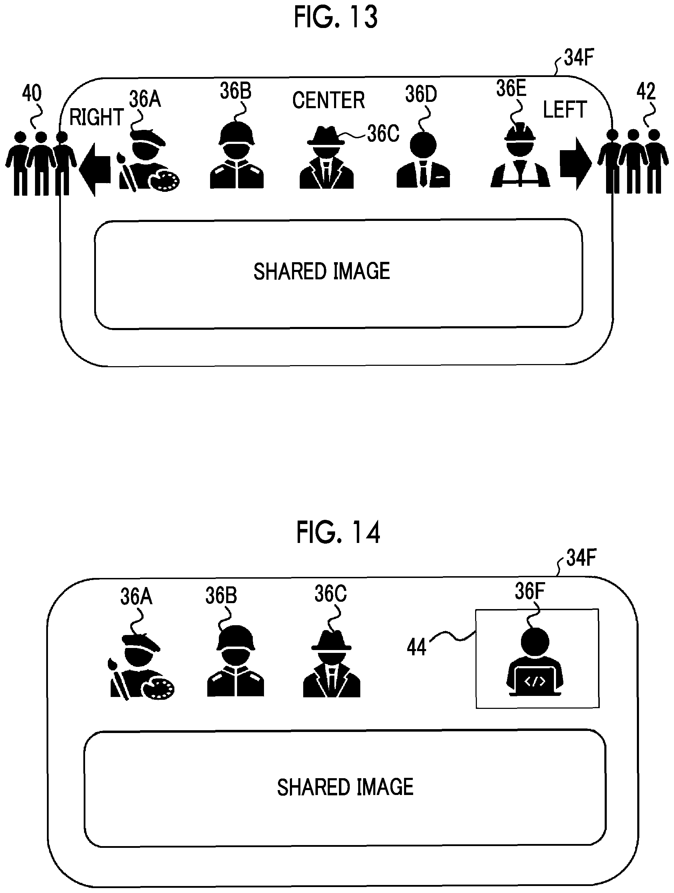

Example 7 of the first exemplary embodiment will be described below with reference to Fig. 13. Fig. 13 illustrates the screen 34F.

In a case where the number of users logged in to the virtual space (for example, users participating in an online conference) is large and the images of all the logged-in users cannot be displayed on the display, the processor 22 in the server 10 may scroll and display the character image of each user on the screen 34F. For example, it is possible to scroll and display the character images of the users to the left or the right on the screen 34F, in a manner that a scroll button is displayed on the screen 34F, and the user presses the button.

For example, the character image indicated by the reference sign 40 is an image displayed on the right side of the screen 34F. The character represented by the character image indicated by the reference sign 40 is a character on the right side of the character of the user F in the virtual space. The character image indicated to by the reference sign 42 is an image displayed on the left side of the screen 34F. The character represented by the character image indicated by the reference sign 42 is a character on the left side of the character of the user F in the virtual space.

The processor 22 in the server 10 emits the voice of the user associated with the character represented by the character image displayed on the right side of the screen 34F, from the device 14R on the right side of the user F. The processor 22 emits the voice of the user associated with the character represented by the character image displayed on the left side of the screen 34F, from the device 14L on the left side of the user F.

### (Example 8 of First Exemplary Embodiment)

Example 8 of the first exemplary embodiment will be described below.

In Example 8 of the first exemplary embodiment, a biometric information measuring device that measures biometric information of a user is used.

The biometric information may include various types of information originating from an organism (for example, human being, non-human animal, or plant) . Examples of the biometric information include information indicating brain activity (for example, brain wave, cerebral blood pressure, and cerebral magnetic field signal), information indicating a pulse rate, myoelectric information such as a myoelectric waveform, information on saliva (for example, saliva volume), information indicating a pulse wave, information indicating blood pressure, information indicating a blood flow rate, information indicating a pulse, information indicating a heart rate, information indicating an electrocardiographic waveform, information indicating eye movement, information indicating a body temperature, information indicating the amount of sweating, information indicating the line of sight, audio information, information indicating the movement of a person, information obtained from the body fluid (for example, blood) , and the like. In addition, the information specified by the biomarker may be used as biometric information. The biometric information may be information due to the potential detected from the organism. For example, biometric information may include a brain wave being a measurement result of minute currents generated by brain activity, an electrocardiogram which is a measurement result of minute currents generated by heartbeat, and measurement result of minute currents generated by muscle activity, or a skin potential being a measurement result of minute currents generated in the skin. The above description is just examples of the biometric information, and biometric information other than the above description may be used. The biometric information measuring device measures one or a plurality of types of biometric information.

Emotional information, mental information, psychological information, or the like may be obtained by analyzing the biometric information. For example, biometric information of a person may be analyzed to obtain information indicating the emotions of a person, information indicating the mental state of the person, information indicating the psychology of the person, and the like. Information indicating the state of animals and plants other than the human being may be obtained by analyzing the biometric information of animals and plants other than humans.

The biometric information measuring device may be a device (for example, a wearable device) that is attached to an organism as a subject to measure biometric information, or may be a device that measures biometric information without being attached to the organism. For example, the biometric information measuring device may be a smartphone or a camera.

The wearable device is, for example, a hearable device worn on the ear of an animal such as a human being, a device worn on the head of an animal, a device (for example, wristwatch-type device such as a smart watch) worn on a wrist, an arm, or a finger (referred to as the "wrist or the like" below) of an animal, a device worn on the neck of an animal, a device worn on the torso (for example, chest and abdomen) of an animal, a device worn on the lower limbs (for example,, human thighs, lower legs, knees, feet, and ankle), a glasses type device, or a contact lens type device. The biometric information measuring device may be a wearable device worn on a site other than the above description. The biometric information measuring device may be attached to a plurality of parts.

The hearable device may be, for example, an earphone, a hearing aid, a pierced device, a clip-type device, or a device including a band or cable wrapped around the ear. The device worn on the head may be, for example, a headset including a band, a cable, or the like wrapped around the head. The device worn on the wrist or the like may be, for example, a device including a band or a cable wrapped around the wrist or the like. A device worn on other parts may also include bands, cables and the like.

The biometric information measuring device may be a contact type device which is a device that measures the biometric information of the organism in contact with the organism. The biometric information measuring device may be a non-contact type device that measures the biometric information of the organism without coming into contact with the organism. The biometric information measuring device may be a device having both a contact type device and a non-contact type device. That is, the biometric information measuring device may come into contact with an organism to measure the biometric information of the organism, and further, may measure the biometric information of the organism without contacting the organism. The biometric information measured in contact with an organism and the biometric information measured without contacting an organism may be the same type of biometric information or different types of biometric information.

In Example, 8 of the first exemplary embodiment, the processor 22 displays an image of each user on the display of the terminal device 12 of each user who transmits and receives information to and from each other in the virtual space. For example, in a case where an online conference is being held, an image of each user participating in the online conference is displayed on the display of the terminal device 12 of each user participating in the online conference. The image of the user is generated by photographing the user with a camera provided in the terminal device 12 of the user or a camera which is not provided in the terminal device 12. The processor 22 acquires image data of each user from the terminal device 12 of each user. The image of the user may be a still image, a moving image, a prepared image (for example, a schematic image), or an image taken in real time.

Describing a specific example, in a case where users A, B, and C transmit and receive information to and from each other in the virtual space (for example, in a case where the users are participating in an online conference), the images of the users A, B, and C are displayed on the displays of the terminal devices 12 of the users A, B, and C.

In Example 8 of the first exemplary embodiment, the processor 22 in the server 10 acquires biometric information of the user logged in to the virtual space (for example, biometric information of the user participating in the online conference) from the biometric information measuring device for the user. Then, the processor 22 changes information to be displayed on the display, based on the acquired biometric information of the user. The processor 22 may estimate the mental state, the psychological state, and the like of the user based on the biometric information of the user, and change the information to be displayed on the display based on the result of the estimation. For example, the processor 22 estimates the mental state or the psychological state based on biometric information by using a known technique.

For example, the processor 22 estimates the degree of stress of the user based on the biometric information of the user, and changes the information to be displayed on the display in accordance with the degree of stress. Specifically, in a case where the stress of the user is equal to or larger than a threshold value, the processor 22 does not display the image of the user on the display of the terminal device 12 of the user. In a case where the stress of the user is smaller than the threshold value, the processor 22 displays the image of the user on the display of the terminal device 12 of each user.

For example, in a case where the users A, B, and C transmit and receive information to and from each other in the virtual space, the stress of each of the users A and B is smaller than the threshold value, and the stress of the user C is equal to or more than the threshold value, the processor 22 displays the images of the users A and B on the displays of the terminal devices 12 of the users A, B and C, and does not display the image of the user C on the displays of the terminal devices 12 of the users A, B and C. In this case, the processor 22 may display another image (icons, avatars, schematic images, images selected by user C, and the like) on the displays of the terminal devices 12 of the users A, B, and C, instead of the image of the user C. Since the image of the user who has stress equal to or larger than the threshold value is not displayed, it is possible to reduce the stress caused by using the virtual space (for example, online conference).

The processor 22 in the server 10 may display the captured image or the photographic image, as the image of the user, on the display of the terminal device 12 of the user during a period from a time point at which transmission and reception of information are started (for example, start time point of an online conference) in the virtual space until a predetermined time elapses. Then, after the time has elapsed, the processor 22 may display an icon, an avatar, or a schematic image on the display of the terminal device 12 of the user.

### (Example 9 of First Exemplary Embodiment)

Example 9 of the first exemplary embodiment will be described below with reference to Fig. 14. Fig. 14 illustrates the screen 34F.

For example, the users A, B, C, and F use an online conference or the like to transmit and receive information to and from each other. A display area 44 is formed on the screen 34F. The display area 44 is an area in which the image of the user F is displayed.

In a case where the user F operates the terminal device 12F to issue an instruction to display or hide the image of the user F, the image of the user F is displayed or not displayed in the display area 44 in accordance with the instruction.

As another example, similar to Example 8 described above of the first exemplary embodiment, the image of the user F may or may not be displayed in the display area 44 in accordance with the degree of stress of the user F. For example, in a case where the degree of stress of the user F is equal to or larger than the threshold value, the processor 22 in the server 10 does not display the image of the user F in the display area 44. In a case where the degree of stress of the user F is smaller than the threshold value, the processor 22 in the server 10 displays the image of the user F in the display area 44.

The image of the user F may be an image generated by photographing the user F with a camera, or may be a schematic image such as an icon or an avatar.

### (Example 10 of First Exemplary Embodiment)

Example 10 of the first exemplary embodiment will be described below. In Example 10 of the first exemplary embodiment, the biometric information of the user is measured by the biometric information measuring device as in Example 8 of the first exemplary embodiment described above.

The processor 22 in the server 10 acquires the biometric information of each user logged in to the virtual space from the biometric information measuring device of each user. The processor 22 analyzes the biometric information of the user to determine whether or not the state of the user is an awake state (that is, a state in which the user is awake) . In other words, the processor 22 determines whether or not the state of the user is a sleeping state (that is, the user is sleeping) . As a technique for such a determination, for example, a known technique may be used.

For example, in a case where the processor 22 in the server 10 determines that the user is sleeping, the processor 22 causes the user to log out from the virtual space (for example, online conference or online game) to which the user is logged in. In this manner, it is possible to reduce the degree of inconvenience caused to other users in comparison to a case where the user keeps logging in even in a state where the user is sleeping.

As another example, the processor 22 may have an automatic response partner such as AI participate in the virtual space instead of the user. In this case, the automatic response partner acts instead of the user. For example, an automatic response partner speaks instead of the user in an online conference. The automatic response partner advances the game instead of the user in the online game. In a case where the processor executes a mode using the automatic response partner, the processor 22 may limit the function of the automatic response partner. For example, the processor 22 may limit the content and number of statements in the online conference, or may limit the functions allowed to be used in the online game.

In a case where the processor 22 in the server 10 causes the user determined to be sleeping to log out from the virtual space, the processor may store various types of information during a period until the user logs out, in the memory 20 in the server 10, the memory 28 in the terminal device 12, or the like. For example, information transmitted and received in an online conference (for example, conversation content, voice, text string, and image), status value or setting value of the character operated by the user in the online game, and various types in the online game. The setting value and information regarding other users are stored in the memory. The next time the user logs in to the virtual space, the information stored in the memory will be utilized. For example, in a case where a user logs in to an online game, the situation immediately before logout is reproduced by using the status value, the setting value, and the like. In addition, the information transmitted and received in the online conference is displayed on the display of the terminal device 12 of the user.

In a case where a user determined to be asleep automatically logs out of the virtual space, the processor 22 in the server 10 may notify other users logged in to the virtual space that the user logs out. For example, the processor 22 transmits information indicating that the user is logging out to the terminal device 12 of another user, and displays the information on the display of the terminal device 12 of the other user.

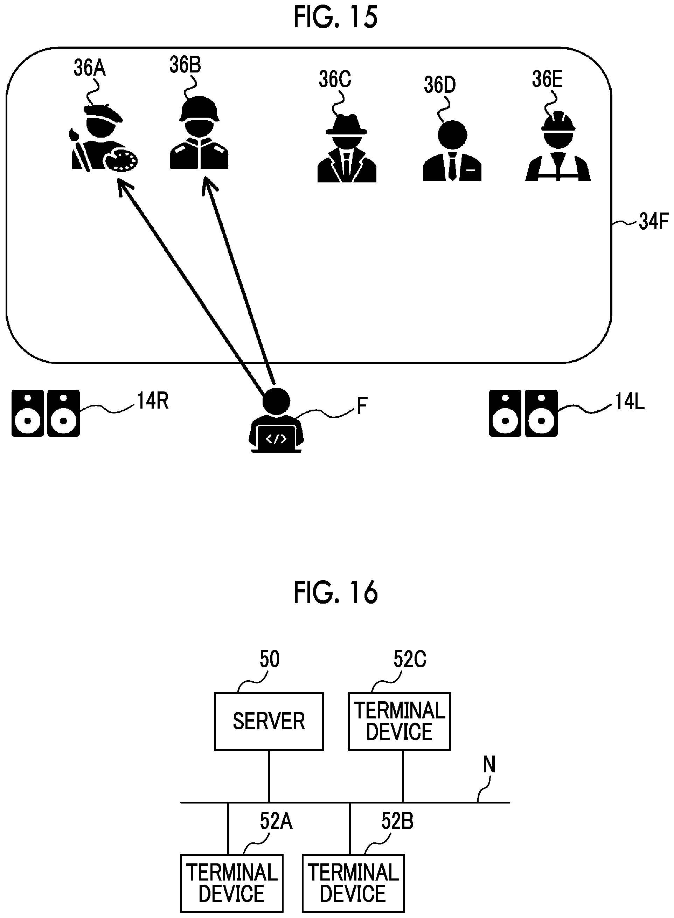

For example, it is assumed that users A, B, C, D, E, and F are logged in to the virtual space, and users A, B, and F are working together. For example, users A, B, and F log in to the same online conference and have a conversation, or jointly advance a game in the same online game. In this case, in a case where the user F falls asleep and automatically logs out, as illustrated in Fig. 15, the users A and B are notified that the user F has automatically logged out. The notification may be given by the processor 22 in the server 10 or by the processor 30 of the terminal device 12F of the user F.

### (Example 11 of First Exemplary Embodiment)

Example 11 of the first exemplary embodiment will be described below. In Example 11 of the first exemplary embodiment, the biometric information of the user is measured by the biometric information measuring device as in Example 8 of the first exemplary embodiment described above.

The processor 22 in the server 10 acquires the biometric information of each user logged in to the virtual space from the biometric information measuring device of each user. The processor 22 determines the mental state of the user by analyzing the biometric information of the user. As a technique for determining a mental state, for example, a known technique may be used.

The processor 22 in the server 10 changes the volume of the sound emitted from the device 14 which is a speaker installed around the user according to the mental state of the user. For example, the processor 22 increases the volume of the sound emitted from the device 14 installed around the user as the degree of tension of the user increases. In a case where the state of the user is in a normal state (for example, state where the user does not have tension), the processor reduces the volume.

For example, in a case where users A, B, and F are participating in the same online conference, the higher the degree of tension of the user F, the more the processor 22 emits the volume of the voices of the users A and B from the device 14 installed around the user F. The volume of the voice emitted from the terminal device 12F may be changed.

In addition to the degree of tension, the degree of concentration, the degree of thinking, and the like may be used as the mental state of the user.

According to Example 11 of the first exemplary embodiment, even in a case where the user is nervous or the concentration is distracted, the conversation of another user can easily reach the user.

The processor 22 in the server 10 may change the volume of the voice of the user in accordance with the relation between the users. For example, in a case where the user with whom the conversation partner is an important user, the processor 22 makes the volume of the voice of the important user louder than the volume of the voice of another user (for example, emit the voice at twice the volume). Information indicating the relation is stored in advance in the memory 20 of the server 10.

For example, in a case where users A, B, C, D, E, and F are participating in the same online conference, the user F sets that the user A is more important user than users B, C, D, and E, the processor 22 in the server 10 emits the voice of the user A from the device 14 being a speaker set around the user F so that the voice of the user A is louder than the voices of the users B, C, D, and E. Also in this case, the volume of the sound emitted from the terminal device 12F may be changed.

### (Example 12 of First Exemplary Embodiment)

Example 12 of the first exemplary embodiment will be described below.

In Example 12 of the first exemplary embodiment, the processor 22 in the server 10 sets a position where the character image of the user logged in to the virtual space is displayed on the screen representing the virtual space (for example, an online conference), display the character image at that position. For example, the processor 22 displays an image representing a seat on the screen, superimposes a character image on the image of the seat, and displays a character image around the image of the seat. By displaying the character image in this manner, the processor 22 creates an effect as the character is sitting in the seat.

The character image may be an image showing the whole body of the user, an image showing the upper body of the user, or an image showing the face of the user. Further, the character image may be an image generated by photographing the user with a camera, or may be an image schematically representing the user.

Further, the processor 22 in the server 10 may move the character of the user in the virtual space according to the movement of the user in the real space, and may move the character image on the screen. For example, a user is photographed by a camera in a real space, and the processor 22 detects the movement of the user based on the image generated by the image, and causes the character to realize a movement similar to the movement. For example, in a case where the user raises the hand, the processor 22 detects that the user has raised the hand based on the image representing the user, causes the user to raise the hand of the character in the virtual space, and causes the user to raise the hand. A character image showing the state in which the user is raising the hand is displayed on the screen.

The processor 22 in the server 10 detects the movement of the user in the real space, moves the character in the virtual space according to the movement. As a result, in a case where the character of another user is touched or hit, the processor may permit transmission and reception of information between the user and the other users. For example, the processor 22 initiates an online conference or a video session for exchanging information between the user and the other user.

### (Example 13 of First Exemplary Embodiment)

Example 13 of the first exemplary embodiment will be described below.

In Example 13 of the first exemplary embodiment, the processor 22 in the server 10 provides a function to allows a user logged in to a virtual space (for example, an online conference) to transmit and receive information to and from another user on a one-to-one basis, or to allow the user to form a group including a plurality of users and transmit and receive information in the formed group.

Example 13 of the first exemplary embodiment will be described in detail with reference to Fig. 5. For example, in a case where the user F operates the terminal device 12F to designate the character image 36D of the user D on the screen 34F, the processor 22 in the server 10 receives the designation and permits transmission and reception of information between the user F and the user D. For example, the processor 22 forms an online conference or the like for exchanging information between the user F and the user D. As a result, the information (for example, voice, text string, and image) emitted by the user F is transmitted from the terminal device 12F of the user F to the device 14 which is installed in the terminal device 12D of the user D or installed around the user D, through the server 10. For example, the voice of the user F is emitted from the device 14 which is a speaker installed around the user D, and the image sent by the user F is displayed on the display of the terminal device 12D. The same applies to the information issued by the user D. In this manner, the user can have a one-to-one conversation with another user. In a case where the user D permits transmission and reception of information to and from the user F, the processor 22 may permit transmission and reception of information between the user F and the user D. Further, the processor 22 may bring the character image 36F of the user F and the character image 36D of the user D into contact with each other on the screen 34F, and the distance between the character image 36F and the character image 36D may be set to a threshold value or less. It may be narrowed, or the character images 36D and 36F may be moved to a specific display area (for example, an area set as a conference room) and displayed in the specific display area.

In a case where the user F operates the terminal device 12F to designate a plurality of character images (for example, the character image 36C of the user C and the character image 36D of the user D) on the screen 34F, the processor 22 in the server 10 receives the designation, forms a group including users F, C, and D, and permits transmission and reception of information in the formed group. In this case as well, information such as voice, text strings, and images can be transmitted and received within the group as in the case of one-to-one. Further, the processor 22 may bring the character images 36C, 36D, 36F into contact with each other on the screen 34F, may narrow the distance between the character images 36C, 36D, 36F to a threshold value or less, or may reduce the character. The images 36C, 36D, and 36F may be moved to a specific display area and displayed in the specific display area.

In a case where a plurality of groups are designated by the user, the processor 22 in the server 10 may permit information to be transmitted and received within the plurality of groups. In this case, the processor 22 permits users belonging to different groups to transmit and receive information within the plurality of groups. In this case as well, the processor 22 brings the images representing each group included in the plurality of groups into contact with each other on the screen, narrows the distance between the images representing each group to a threshold value or less, and represents each group. The image may be moved to a specific display area and displayed in the specific display area.

### (Example 14 of First Exemplary Embodiment)

Example 14 of the first exemplary embodiment will be described below.

In Example 14 of the first exemplary embodiment, the processor 22 in the server 10 forms an area (for example, a conference table) for exchanging information with another user in the virtual space. The number of users capable of transmitting and receiving information at the conference table may or may not be limited. For example, in a virtual space, in a case where a seat is provided at a conference table and a character sits at that seat, the processor 22 permits the user associated with the character and another user who is associated with another character and sit at the same conference table to transmit and receive information (for example, voice, text strings, and images) to and from each other.

For example, a plurality of conference tables are formed in the virtual space. In the virtual space, the processor 22 in the server 10 automatically moves the character to the conference table in a predetermined order at predetermined time intervals, and makes the character sit at the conference table. For example, in a case where the conference tables 1, 2, 3, 4, 5, 6 are formed, the processor 22 uses the character of the user A in the order of the conference tables 1, 3, 2, 5, 4, 6. To each conference table. The time interval and the order thereof may be set by the organizer of the conference or by the user A. For example, the character of user A moves every 30 minutes.

Further, in a case where the character moves from the transfer source conference table to another destination conference table, the processor 22 in the server 10 receives information transmitted and received through the transfer source conference table and the transfer source. The information generated by the collaborative work at the conference table may be stored in the memory 20 of the server 10 or the memory 28 of the terminal device 12 of the user associated with the character. For example, the information is stored in a storage folder or the like associated with the account of the user.

### <Second Exemplary Embodiment>

The information processing system according to the second exemplary embodiment will be described with reference to Fig. 16. Fig. 16 illustrates an example of the configuration of the information processing system according to the second exemplary embodiment.

The information processing system according to the second exemplary embodiment includes, for example, a server 50 and one or more terminal devices. In the example illustrated in Fig. 16, the information processing system according to the second exemplary embodiment includes terminal devices 52A, 52B, 52C. The number of terminal devices illustrated in Fig. 16 is only an example, and one or a plurality of terminal devices may be included in the information processing system according to the second exemplary embodiment. In the following, in a case where it is not necessary to distinguish the terminal devices 52A, 52B, and 52C, the terminal devices 52A, 52B, and 52C will be referred to as a "terminal device 52". The information processing system according to the second exemplary embodiment may include devices other than the server 50 and the terminal device 52.

The server 50 and each terminal device 52 have a function of communicating with other devices. The communication may be a wired communication using a cable or a wireless communication. That is, each of the devices may be physically connected to another device by a cable to transmit and receive information, or may transmit and receive information by wireless communication. As the wireless communication, for example, short-range wireless communication, Wi-Fi, or the like is used. The wireless communication of standards other than the above description may be used. For example, each device may communicate with another device via a communication path N such as LAN or the Internet.

In the information processing system according to the second exemplary embodiment, the service described below is provided by the server 50. That is, the first content is posted by the first user who is the poster, and the content is viewed by the viewer. In addition, a post frame for posting the second content prepared by the second user, which is an example of the viewer, to the first content is provided for a fee. The second user can purchase the posting frame by paying a fee, and can post the second content to the posting frame. The second content posted in the post frame is displayed in the post frame and is viewed by a user (for example, a first user who is a poster or a viewer other than the second user). In a case where the second content is posted in the post frame, a portion or the entirety of the fee paid by the second user is paid to the first user. That is, the first user can obtain a portion or the entirety of the fee required for posting the second content. Each posted content (for example, the first content or the second content) is distributed by a distribution service or the like and viewed by the user. The viewing of the first content and the second content may be charged or free.

The content is image data (for example, still image data or moving image data), audio data (including music data), text data (for example, a message), or a combination thereof. Further, it may be image data created by digitizing a handwritten picture or a text string. The second content may be content created by the second user or may be content provided by the server 50.

In addition, the fee for the post frame for posting the second content may be changed according to the type, capacity, display size, content, and the like of the second content. For example, in a case where the second content is text data, the fee for the post frame is set higher as the number of characters increases. In addition, the fee for the post frame for moving images and the post frame for audio is set higher than the fee for the post frame for text. In addition, the longer the reproduction time of the moving image, the higher the fee for the post frame is set. In addition, the fee for the post frame may be changed according to the degree of decoration of the second content. For example, the more complicated the design of the second content, the higher the fee for the post frame is set than the simple design.

A post frame dedicated to moving images, a post frame dedicated to music, a post frame dedicated to text, a post frame capable of posting a plurality of types of contents, and the like may be determined. The post frame dedicated to moving images is a post frame in which only moving images can be posted. The music-only post frame is a post frame in which only music or audio can be posted. The text-only post frame is a post frame in which only text can be posted. A post frame in which a plurality of types of contents can be posted is, for example, a post frame in which a plurality of combinations of moving images, music and text, or one of the combinations can be posted. The fee may be different for each type of post frame. For example, the fee for a post frame that allows posting of a plurality of types of content and a post frame dedicated to moving images is set higher than the fee for post frames for other contents. In a case where the identical posting frames or a plurality of different posting frames are simultaneously purchased, the fee may be discounted.

In addition, payment may be made at the stage of purchasing the post frame, payment may not be performed at the stage of purchasing the post frame, and payment may be made at the stage of posting the second content in the post frame.

The above-mentioned service may be a moving image distribution service, a music distribution service, or a content printing service. The moving image or music distribution service may be a live distribution service that distributes moving images or music in real time. For example, a moving image as the first content is distributed, and the second user can post the second content to the moving image by purchasing a post frame for the moving image. For example, the second user may post a comment, an image (for example, an icon) or a sound for the moving image as the second content. The same applies in a case where music is distributed. In addition, in a case where content such as a ticket, a photo, or bromide is printed as the first content, the second user purchases a post frame for the printed first content to cover the first content, and thus is allowed to post the second content for the first content. Of course, the services are only an example, and in services and systems other than the above description, a post frame for the first content may be purchased and the second content may be posted.

For example, the second user may be a fan of the first user who is the poster of the first content. Since the second user posts the second content in the post frame for the first content, a community of fans may be formed. For example, the community can be activated by posting the second content between the second users. In addition, since a portion or the entirety of the fee paid for posting the second content is paid to the first user, the fan can financially support the first user. Also, in a case where the second content is purchased by yet another user, the second user who posted the second content can benefit.

The terminal device 52 is used by the above-mentioned poster and viewer. Here, as an example, the followings are assumed. The terminal device 52A is used by the poster who is the first user. The terminal device 52B is used by the viewer who is the second user, and the terminal device 52C is used by other users (for example, other viewers) other than the first user and the second user.

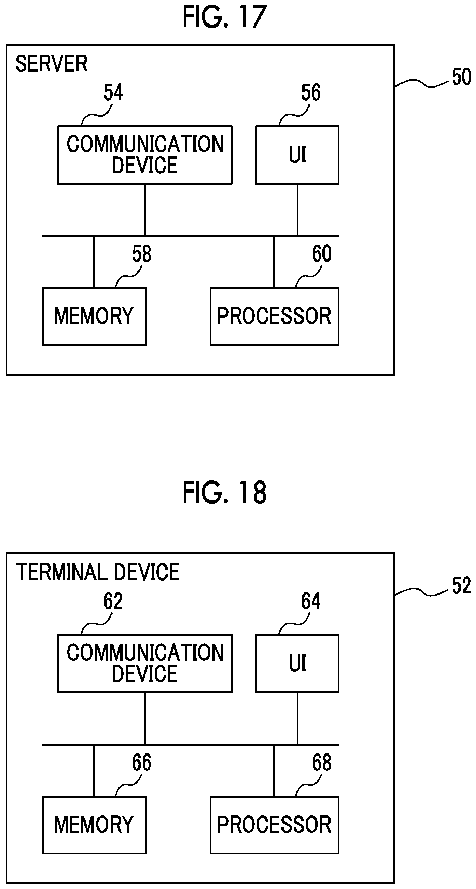

The hardware configuration of the server 50 will be described below with reference to Fig. 17. Fig. 17 illustrates an example of the hardware configuration of the server 50.

The server 50 includes, for example, a communication device 54, a UI 56, a memory 58, and a processor 60.

The communication device 54 is a communication interface having a communication chip, a communication circuit, and the like, and has a function of transmitting information to another device and a function of receiving information from the other device. The communication device 54 may have a wireless communication function or a wired communication function. The communication device 54 may communicate with another device by using, for example, short-range wireless communication, or may communicate with another device via the communication path N.

The UI 56 is a user interface and includes at least one of a display and an operation device. The display is a display device such as a liquid crystal display or an EL display. The operation device is a keyboard, an input key, an operation panel, or the like. The UI 56 may be a UI such as a touch panel having both a display and an operation device.

The memory 58 is a device that constitutes one or a plurality of storage regions for storing various types of information. Examples of the memory 20 include a hard disk drive, various types of memory (for example, RAM, DRAM, and ROM), other storage devices (for example, optical disk), or a combination thereof. One or more memories 58 are included in the server 50.

For example, in the memory 58, the account information of the user who posts the content, the account information of the user who browses the content, and the information for making a payment regarding the browsing or posting of the content (for example, information of the credit card of the user or information indicating the account number of the bank to which the transfer is made) is stored. This information may be stored in a device other than the server 50 (for example, authentication server, or a payment server). A device such as a server 50 or an authentication server authenticates the user based on the account information, and the server 50 may permit the user who has succeeded in the authentication to post or view the content. The server 50 may permit the user to post or browse the content without being authenticated.

The processor 60 is configured to control the operation of each portion of the server 50. The processor 60 may have a memory.

In the second exemplary embodiment, the processor 60 provides a service (for example, a distribution service) that realizes posting and browsing of contents. For example, the processor 60 provides a content distribution service so that a viewer can view the content posted on the distribution service. The distribution service may be provided, for example, on the Internet, on another network, or by a dedicated application.

For example, in a case where the first user who is the poster accesses the distribution service by operating the terminal device 52A and posts the first content to the distribution service, the first content is transmitted from the terminal device 52A to the server 50. The processor 60 receives the first content and sets the state of the first content to be a state where the first content is enabled to be viewed by the viewer. By operating the own terminal device 52 (for example, terminal devices 52A, 52B, 52C), the viewer can access the distribution service and browse the first content on the distribution service.

In addition, the processor 60 provides a post frame for the first content posted by the first user. The second content prepared by the second user, which is an example of the viewer, is posted to the post frame by the second user for a fee. The second user can access the distribution service and post the second content in the post frame by operating the own terminal device 52B. For example, the post frame is displayed on the display of the terminal device 52B, and the second user posts the second content to the displayed post frame. The posted second content is transmitted from the terminal device 52B to the server 50. The processor 60 receives the second content and sets the state of the second content so that it can be viewed by a user (for example, a first user or another viewer) . For example, the second content is displayed in the post frame. In addition, the first user and other viewers can access the distribution service and browse the second content on the distribution service by operating the own terminal device.

In addition, the processor 60 executes a content billing process. For example, in a case where the second content is posted in the above post frame, the processor 60 pays a portion or the entirety of the fee paid by the second user for posting the second content to the second content posting destination. 1 Pay to the first user who posted the first content. For example, the processor 60 makes a payment by a predetermined payment method. The payment method may be a payment using a credit card, a payment using electronic money, a payment using a cryptocurrency, or a bank transfer. Of course, payment methods other than the above description may be used. Further, the processor 60 may exchange the currency used for payment into another currency and pay the fee to the first user in the currency after the exchange.

The hardware configuration of the terminal device 52 will be described below with reference to Fig. 18. Fig. 18 illustrates an example of the hardware configuration of the terminal device 52.

The terminal device 52 includes, for example, a communication device 62, a UI 64, a memory 66, and a processor 68.

The communication device 62 is a communication interface having a communication chip, a communication circuit, and the like, and has a function of transmitting information to another device and a function of receiving information transmitted from the other device. The communication device 62 may have a wireless communication function or a wired communication function. The communication device 62 may communicate with another device by using, for example, short-range wireless communication, or may communicate with another device via the communication path N.

The UI 64 is a user interface and includes at least one of a display and an operation device. The display is a display device such as a liquid crystal display or an EL display. The operation device is a keyboard, an input key, an operation panel, or the like. The UI 64 may be a UI such as a touch panel having both a display and an operation device. The UI 64 may include a microphone and a speaker.

The memory 66 is a device that constitutes one or a plurality of storage regions for storing various types of information. Examples of the memory 28 include a hard disk drive, various types of memory (for example, RAM, DRAM, and ROM), other storage devices (for example, optical disk), or a combination thereof. One or more memories 66 are included in the terminal device 52.

The processor 68 is configured to control the operation of each portion of the terminal device 52. Processor 68 may have memory.

For example, the processor 68 accesses the distribution service provided by the server 50, and displays the content posted to the distribution service on the display of the terminal device 52. In addition, the processor 68 posts the content to be posted to the distribution service. In addition, the processor 68 displays various information provided by the distribution service on the display of the terminal device 52. For example, the processor 68 displays a post frame on which the second content is posted on the display of the terminal device 52.

Examples of the second exemplary embodiment will be described below. The processor 60 of the server 50 or the processor 68 of the terminal device 52 may execute the processing according to each example of the second exemplary embodiment, or the processor 60 and the processor 68 cooperate with each other to perform the second embodiment. The process according to each embodiment of the embodiment may be executed. A portion of a process may be executed by the processor 60 and another portion of the process may be executed by the processor 68. The server 50, the terminal device 52, or a combination thereof corresponds to an example of the information processing apparatus according to the second exemplary embodiment.

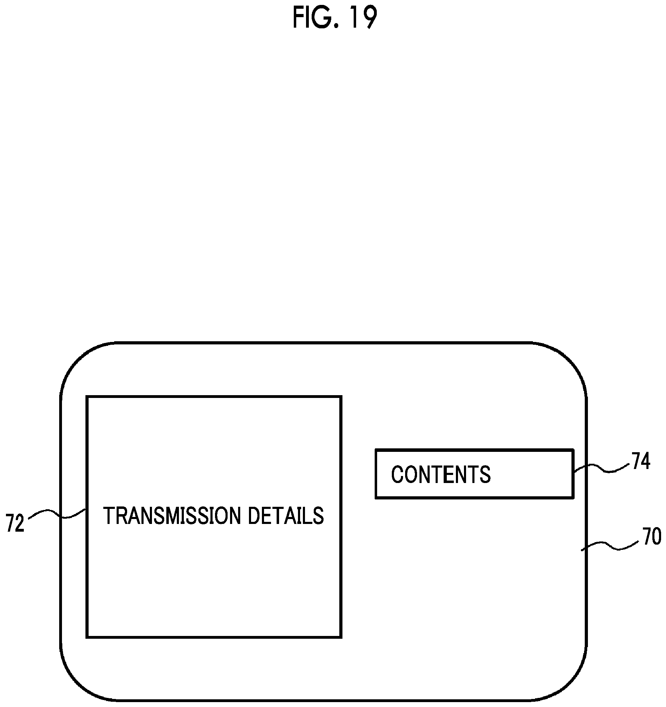

A screen displayed while using the distribution service will be described with reference to Fig. 19. The screen 70 is illustrated in Fig. 19.

The screen 70 is displayed on the display of the terminal device 52 of a user (for example, a poster or a viewer) who has logged in to the distribution service. For example, in a case where a second user who is a viewer accesses the distribution service by operating the terminal device 52B, the screen 70 is displayed on the display of the terminal device 52B. The same applies to the terminal device 52 of another user. The distribution frame 72 and the post frame 74 are displayed on the screen 70.

The distribution frame 72 is a display area in which the first content posted to the distribution service by the first user who is the poster is displayed. For example, in a case where the viewer selects the content to be displayed from the content group provided by the distribution service by operating the own terminal device 52, the processor 60 of the server 50 displays the selected content in the distribution frame 72 as the first content. The content group provided by the distribution service includes the content posted by the first user and the content posted by the second user.

The post frame 74 is a display area in which the second content is posted by the second user who is a viewer. The second user can post the second content to the post frame 74 by purchasing the post frame 74. The second content posted to the post frame 74 is the content posted to the first content posted to the distribution frame 72. The posted second content is displayed in the post frame 74. For example, the display of the terminal device 52B of the second user displays information (for example, the name of the content) regarding one or more contents that are candidates for the second content. The second user selects a content to be the second content from the one or a plurality of the contents, and gives an instruction to post the second content to the post frame 74. Upon receiving the posting instruction, the processor 60 of the server 50 posts the second content selected by the second user to the distribution server, and displays the second content in the post frame 74.

The processor 60 of the server 50 performs a process of paying a portion or the entirety of the purchase fee of the post frame 74 to the first user who is the poster who posted the first content.

The post frame 74 may be arranged around the distribution frame 72 on the screen 70, or may be displayed in the distribution frame 72.

In the example illustrated in Fig. 19, the post frame 74 is displayed at a position next to the distribution frame 72 as an example of the position around the distribution frame 72. Although the post frame 74 is arranged next to the distribution frame 72, it may be displayed above or below the distribution frame 72. The display position of the post frame 74 may be changed by the user.

In the example illustrated in Fig. 19, one post frame 74 is displayed, but a plurality of post frames 74 may be displayed side by side next to the distribution frame 72. For example, in a case where the identical second user purchases a plurality of posting frames 74, the purchased plurality of posting frames 74 are displayed side by side. For example, the plurality of posting frames 74 are displayed side by side in chronological order in the order of the time at which the posting frames 74 are purchased.

Further, even in a case where a plurality of different second users purchase one or a plurality of posting frames 74, the posting frames 74 are displayed in chronological order in the order of the time of purchase. For example, in a case where the second user A purchases the posting frame 74 and posts the second content, and then another second user B purchases the posting frame 74 and posts the second content, the post frames 74 are displayed side by side in the order of the post frame 74 purchased by the user B and the post frame 74 purchased by the second user B. In this case, the screen 70 on which the post frames are displayed is displayed on the display of the terminal device 52 of each of the second users A and B. That is, the second user A can browse the second content posted by the second user A and the second content posted by the second user B together with the first content. Similarly, the second user B can browse the second content posted by the second user B and the second content posted by the second user A together with the first content. In this manner, a plurality of different second users purchase the post frame 74 and post the second content, so that the second users can transmit and receive information (for example, a conversation such as chat) . For example, by posting the second content to each other by a plurality of different second users, it is possible to appeal to the first user, the second user other than himself, and other users. For example, the second user can appeal that the second user is a fan of the first user.

As another example, the post frame 74 may be displayed in the distribution frame 72. For example, a post frame 74 having a predetermined size (for example, a size of 1/4 of the distribution frame 72) is displayed in the distribution frame 72. The size of the post frame 74 is only an example, and the size of the post frame 74 may be any other size or may be changed by the user. The second content posted in the post frame 74 is displayed superimposed on the first content displayed in the distribution frame 72. For example, in a case where the first content is a moving image, the second content is displayed superimposed on the moving image being played. Even in a case where the first content is a still image, the second content is superimposed and displayed on the still image.

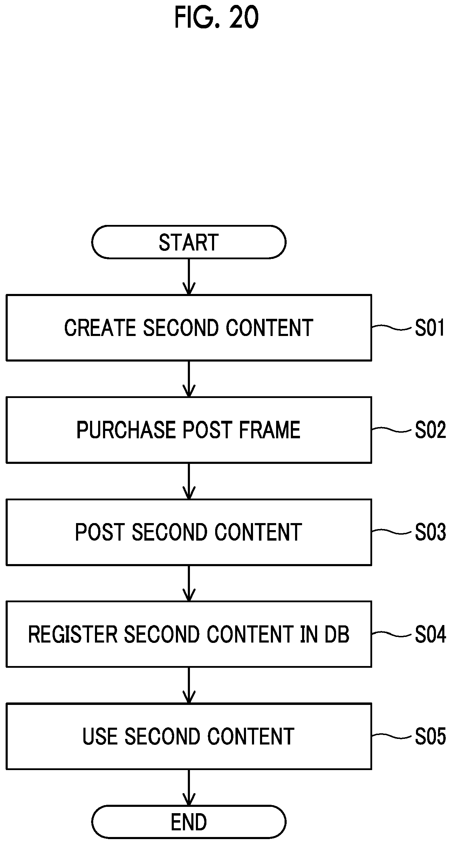

The flow of processing according to the second exemplary embodiment will be described below with reference to Fig. 20. Fig. 20 illustrates a flowchart showing the flow of processing according to the second exemplary embodiment.

The second user, who is a viewer, creates a second content posted for the first content (S01). The second user may select the content posted for the first content from the content group provided by the server 50 as the second content. Such content may be provided for a fee or for free.

Next, the second user purchases the post frame 74 (S02) . The second user may purchase the posting frame 74 before creating the second content.

Next, the second user posts the second content to the post frame 74 (S03) . The processor 60 of the server 50 displays the posted second content in the post frame 74.

The posted second content is transmitted from the terminal device 52B of the second user to the server 50. The processor 60 of the server 50 registers the posted second content in the content database (DB) (S04). For example, the second content is stored in the memory 58 of the server 50 or another device.

The second content registered in the content database is used by the user (S05). For example, the second content is distributed by the distribution service, and the first user who is the poster, the viewer who posted the second content, other viewers, and the like can browse the second content.

The processor 60 of the server 50 may notify the first user who is the poster who posted the first content that the second content has been posted for the first content. For example, the processor 60 transmits information indicating that the second content has been posted to the first content to the terminal device 52A of the first user, and displays the information on the display of the terminal device 52A.

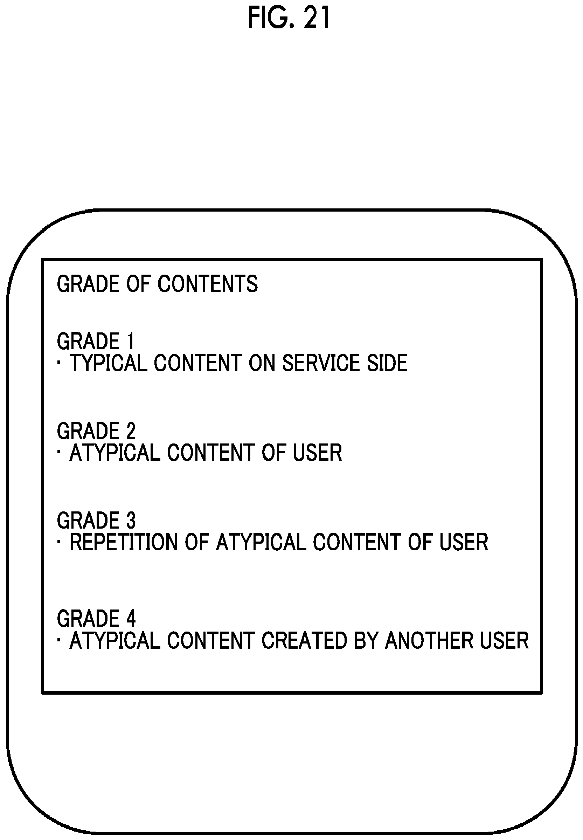

Hereinafter, the type of the second content will be described with reference to Fig. 21. Fig. 21 illustrates the type of the second content.

Here, as an example, the types of the second contents are classified by grade. Here, grades 1 to 4 are determined as an example.

Grade 1 content is typical content provided by a distribution service. This typical content is content created in advance by the provider of the distribution service and is not permitted to be changed by the user. Of course, the typical content may be changed by the user. For example, the second user can select content from the typical content group and post the selected content as the second content in the post frame 74.

Grade 2 content is atypical content newly created by a second user. That is, the grade 2 content is not the content created and provided in advance by the distribution service, but the content created by the second user. For example, the second user can post the atypical content newly created by the second user to the post frame 74 as the second content.

Grade 3 content is atypical content created by a second user and is already registered in the content database. The atypical content registered in the database can be repeatedly used by the second user. For example, the second user can select atypical content created by the second user and registered in the database and post it in the post frame 74 as the second content.

Grade 4 content is atypical content provided by a user other than the second user who intends to post the content as the second content (hereinafter referred to as "third user") . The second user can post the content provided by the third user to the post frame 74 as the second content. Grade 4 content is provided for a fee or for free. For example, grade 4 content is created by a third user and registered in the content database. The second user can purchase the grade 4 content registered in the database and post the purchased content as the second content in the post frame 74. The processor 60 of the server 50 may pay a portion or the entirety of the purchase price to a third user who provided the grade 4 content.

Each piece of information illustrated in Fig. 21 may be displayed on the display of the terminal device 52 of the user who uses the distribution service. For example, by operating the terminal device 52B, the second user can post the content of the grade selected by the second user to the post frame 74 as the second content.

The processor 60 of the server 50 may provide the second content posted by the second user to users other than the second user for a fee or free. In a case where the second content is provided for a fee, the other user can use the second content by purchasing the second content. For example, the other user may view, edit, or post to the distribution service the purchased second content. In this case, the processor 60 may pay a portion or the entirety of the fee paid by the other user who received the second content to the second user who posted the second content.

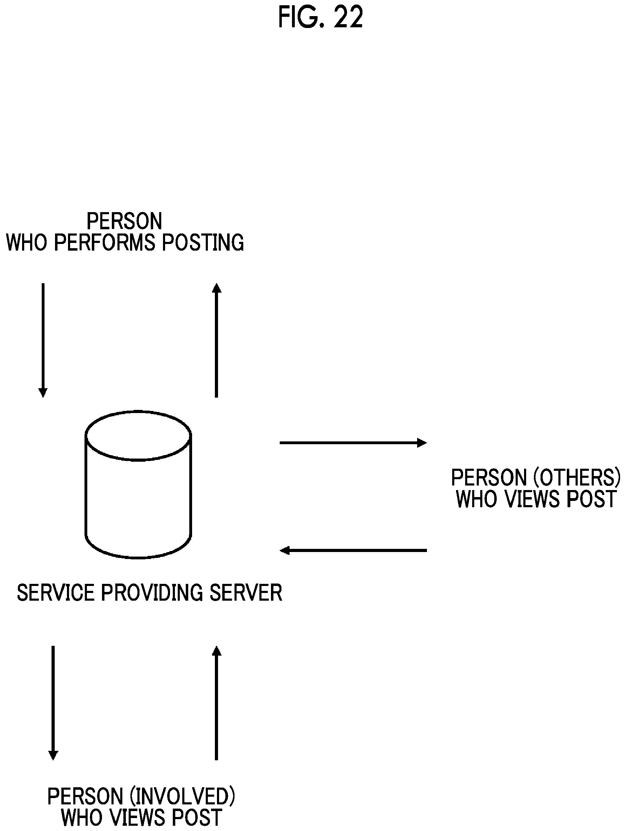

The transmission and reception of contents will be described in detail with reference to Fig. 22. Fig. 22 is a diagram illustrating the transmission and reception of contents. The service distribution server in Fig. 22 is an example of the server 50.

The poster who is the first user can post the first content to the service distribution server by operating the own terminal device 52A. Further, by operating the terminal device 52A, the first user enables viewing of the content provided by the service distribution server (for example, content provided by the first user, content provided by the second user, or content provided by another user).

A viewer (self) who is a second user can browse the content provided by the service distribution server by operating the own terminal device 52B. Further, the second user can purchase a post frame for the first content and post the second content to the post frame by operating the terminal device 52B. The second user may post the first content as a poster.

Another viewer (other) can browse the content provided by the service distribution server by operating the own terminal device 52. Other viewers may post the first content as a poster, or may purchase a posting frame and post the second content in the posting frame.

According to the above distribution service, a post frame for the first content is purchased by a viewer who is a second user, and a portion or the entirety of the purchase price is a poster who is the first user who posted the first content. As a result, the first user can benefit from the second user.

In a case where the second content is provided to another viewer for a fee, a portion or the entirety of the price is paid to the second user who posted the second content. This allows the second user to benefit from other viewers.

In addition, other viewers can save the trouble of creating the content by receiving the provision of the second content posted by the second user and using the second content. In addition, other viewers may obtain permission to edit the second content from the second user, edit the second content, and post the content to the distribution service. In a case where the edited second content is used for a fee, a portion or the entirety of the usage fee may be paid to the other viewer.

The processor 60 of the server 50 may determine whether or not the content posted to the distribution service is the content created by the user who posted the content to the distribution service. That is, the processor 60 may determine whether or not the posted content is the original content of the user who posted the content. The original content of the user is content created without relying on content created by users other than the user, for example, the content is content that is not a derivative work. For example, an original content of the user is content that is not content created by editing content created by a user other than the user.

For example, the processor 60 determines whether or not the first content is the original content of the first user who posted the first content, or the second content is the original of the second user who posted the second content.

In a case where the content posted to the distribution service is the original content of the user who has posted the content, the processor 60 permits other users to view the content. In a case where the posted content is not the original content, the processor does not permit other users to view the content.

For example, in a case where the posted content is associated with information indicating a creator, an author, or a copyright holder of the content, the processor 60 of the server 10 determines whether or not the posted content is the original content of the user who posted the content based on the information. For example, in a case where the user who posted the content is the author of the content, the processor 60 determines that the content is the original content of the user. In a case where information indicating the creator, the author, the copyright holder, and the like of the content is registered in the database, the processor 60 searches the information registered in the database, and the posted content is the relevant content. It may be determined whether or not the content is the original content of the user who posted the content. Further, by using the blockchain technology, the creator, the author, the copyright holder, and the like of the content may be uniquely identified.

In a case where a plurality of people are represented in the first content, the processor 60 of the server 50 permits the second user to post the second content to each person included in the plurality of people. The processor 60 may pay a portion or the entirety of the fee paid by the second user for posting to the person to whom the second content is posted.

Further, in a case where a plurality of individual contents are included in the first content, the processor 60 in the server 50 may permit the second user to post the second content with respect to the individual contents included in the plurality of individual contents. The processor 60 may pay a portion or the entirety of the fee paid by the second user for posting to the user who posted the individual content to which the second content is posted.

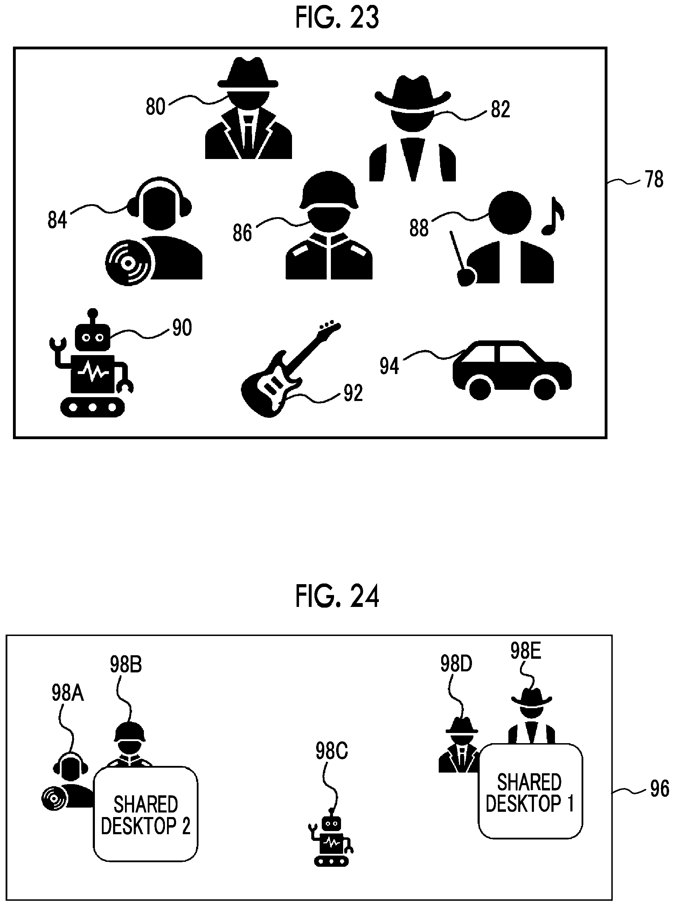

For example, as illustrated in Fig. 23, the first content including a plurality of individual contents (for example, individual contents 80 to 94) is displayed on the screen 78. The screen 78 is displayed, for example, on the display of the terminal device 52B of the second user. The second user can post the second content for each individual content included in the first content. For example, in a case where the second user posts the second content to the individual content 80, the processor 60 of the server 50 pays a portion or the entirety of the fee paid by the second user to post the second content, to the first user who posted the individual content 80. The same applies to other individual contents. The same is applied to a case where a plurality of people are represented in the first content.

The second exemplary embodiment may be applied to the first embodiment. This application example will be described with reference to Fig. 24. The screen 96 is illustrated in Fig. 24. The screen 96 is a screen displayed on the display of the terminal device 52. Similar to the first exemplary embodiment, the screen 96 displays character images (for example, character images 98A, 98B, 98C, 98D, 98E) representing each character existing in the virtual space.

The user A associated with the character image 98A and the user B associated with the character image 98B can share the shared desktop 2 and transmit and receive information to and from each other.

The user D associated with the character image 98D and the user E associated with the character image 98E can share the shared desktop 1 and transmit and receive information to and from each other.

In this case, the processor 60 of the server 50 provides a service capable of posting the second content to the shared desktop for a fee. The second user can post the second content to the shared desktop for the fee. The processor 60 pays a portion or the entirety of the fee to the user who shares the shared desktop on which the second content is posted. Further, the processor 60 may permit a second user who has posted the second content to the shared desktop to share the information shared on the shared desktop.

For example, in a case where the second user posts the second content to the shared desktop 1 by operating the terminal device 52, the processor 60 of the server 50 charges the fee paid by the second user for the posting. Portion or the entirety of the above is paid to users A and B who share the shared desktop 1. Further, the processor 60 permits information (for example, information transmitted and received between users A and B via the shared desktop 1) shared by the users A and B via the shared desktop 1 to be shared by the second user. As a result, the second user can share the information transmitted and received on the shared desktop 1. Further, the processor 60 transmits information indicating that the second content has been posted to the shared desktop 1 by the second user to the terminal devices 52 of the users A and B sharing the shared desktop 1. Then, users A and B may be notified to that effect. Further, the processor 60 may display information indicating that the second content has been posted to the shared desktop 1 by the second user on the display of the terminal device 52 of each user using the virtual space. In this manner, for example, in a case where the second user is a fan of the users A and B, that can be appealed to other users.

The processor 60 in the server 50 may display information regarding the second user together with the first content on the display of the terminal device 52. For example, the processor 60 may display information regarding the second user in an area other than the distribution frame 72 and the post frame 74 on the screen 70 illustrated in Fig. 19, or may display information regarding the second user in the distribution frame 72 (that is, the first Information regarding the second user may be displayed on one content).

The information regarding the second user may be user identification information (for example, name, account information, and nickname) for identifying the second user who purchased the post frame 74. In addition, the information regarding the second user may be information indicating the ranking of the second user based on the fee paid for purchasing the post frame 74 and posting the second contents.

For example, the processor 60 of the server 50 calculates the amount of money (for example, the total fee) paid to purchase the posting frame 74 for each second user. More specifically, the processor 60 calculates the amount paid by each second user to purchase the posting frame 74 for each first user or for each first content. To explain with a specific example, the first user A posts the first content A, and the second users B1, B2, and B3 purchase one or more posting frames 74 for the first content A, respectively. It is assumed that one or more second contents are posted. The processor 60 calculates the amount paid for purchasing the posting frame 74 (for example, the total fee paid by each second user) for each of the second users B1, B2, and B3. In a case where the total fee paid by the second user B1 is the largest, the total fee paid by the second user B2 is the second largest, and the total fee paid by the second user B3 is the smallest, information indicating such ranks (that is, ranking) is displayed as information regarding the second user. In this case, the ranking of the second user B1 is the first place, the ranking of the second user B2 is the second place, and the ranking of the second user B3 is the third place. By displaying such a ranking, for example, the second user having a higher ranking can appeal the second user to the first user, the second user other than himself/herself, or other users. In addition, the second user with a higher ranking can obtain a sense of superiority over the other second users.

In the above example, the amount paid by each second user is calculated for each first content, and the ranking according to the amount is displayed, but the amount paid by each second user is calculated for each first user. The ranking according to the amount of money may be displayed. For example, a first user posts a plurality of different first contents, and each second user purchases a post frame 74 for a portion or the entirety of the plurality of first contents and posts the second content. In this case, the processor 60 calculates the total fee paid to purchase the posting frame 74 for a portion or the entirety of the plurality of first contents for each second user, and creates a ranking based on the total fee. The ranking is displayed on the display as information regarding the second user.

The processor 60 of the server 50 may display information regarding the second user on the display of the terminal device 52 during the output of the first content. For example, in a case where the first content is a moving image, the processor 60 causes the display to display information regarding the second user during reproduction of the first content. In a case where the first content is the content to be printed, the processor 60 causes the display to display information regarding the second user while the first content is being printed. For example, a printer or a multifunction device (for example, a device having a printer, a scanner, or the like) corresponds to an example of an information processing apparatus, and a distribution frame 72 and a post frame 74 are displayed on the display of the printer or the multifunction device. In a case where the first content is printed by the printer or the multifunction device, the processor 60 causes the display of the printer or the multifunction device to display information regarding the second user. For example, in a case where the first content such as a photo, a ticket, or bromide is printed, information regarding the second user is displayed.

The second exemplary embodiment may be applied to the first exemplary embodiment. For example, in a case where various services are provided via the virtual space according to the first exemplary embodiment, various functions and services are executed by executing the processes according to the second embodiment, or a plurality of users. Various messages (for example, sound indicating thank you) may be displayed on the shared desktop shared by.

The appendix of the second exemplary embodiment will be described below.

### (Appendix 1)

An information processing apparatus including:
a processor configured to:
provide a post frame for a second content prepared, for a fee, by a second user with respect to a first content posted by a first user, and
pay, in a case where the second content is posted in the post frame, a portion or the entirety of a fee paid by the second user to the first user.

### (Appendix 2)

The information processing apparatus according to Appendix 1, in which the second content is a content provided by a third user.

### (Appendix 3)

The information processing apparatus according to Appendix 1 or 2, in which the processor is further configured to:
provide the second content to a user other than the second user for a fee.

### (Appendix 4)

The information processing apparatus according to Appendix 3, in which the processor is further configured to:
pay a portion or the entirety of the fee paid by the user who has received the second content, to the second user.

### (Appendix 5)

The information processing apparatus according to any one of Appendices 1 to 4, in which the processor is further configured to:
determine whether or not the second content is created by the second user.

### (Appendix 6)

The information processing apparatus according to any one of Appendices 1 to 5, in which, in a case where a plurality of people are represented in the first content, the processor is further configured to:
permit each person included in the plurality of people to post the second content and
pay a portion or an entirety of a fee paid by the second user, to a person who posts the second contents.

### (Appendix 7)

The information processing apparatus according to any one of Appendices 1 to 5, in which, in a case where the first content includes a plurality of individual contents, the processor is further configured to:
permit the second content to be posted with respect to the individual content.

### (Appendix 8)

The information processing apparatus according to any one of Appendices 1 to 7, in which the processor is further configured to:
display information regarding the second user on a display together with the first content.

### (Appendix 9)

The information processing apparatus according to Appendix 8,
in which the information regarding the second user is information regarding the ranking of the second user based on the fee paid for posting the second content.

### (Appendix 10)

The information processing apparatus according to Appendix 8 or 9, in which the processor is further configured to:
display information regarding the second user on the display during an output of the first content.

### (Appendix 11)

The information processing apparatus according to any one of Appendices 1 to 10,
in which the post frame is disposed in an area in which the first content is displayed or disposed around the area n which the first content is displayed.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

- 10:: server
- 12:: terminal device
- 14:: device

## Claims

1. An information processing apparatus comprising:
a processor configured to:
change control of a device disposed in a real space in accordance with a position of a character in a virtual space.

2. The information processing apparatus according to claim 1, wherein the processor is configured to:
change control of a device of a user, which is disposed in the real space in accordance with a positional relation between a character of the user and a character of another user in the virtual space.

3. The information processing apparatus according to claim 1, wherein the processor is configured to:
change control of the device of the user, which is disposed in the real space in accordance with a positional relation between a position of a sharing region for sharing information between the user and another user in the virtual space, and a position of a character of the other user in the virtual space.

4. The information processing apparatus according to claim 2 or 3,
wherein the device is a speaker of the user, and
the processor is configured to:
control a voice of the other user, which is emitted from the speaker in accordance with the positional relation.

5. The information processing apparatus according to claim 2 or 3,
wherein the device is a display of the user, and
the processor is configured to:
change an image displayed on the display in accordance with the positional relation.

6. The information processing apparatus according to claim 1,
wherein a first character and a second character of a user are in the virtual space, and
the processor is further configured to:
separately display a first sharing region and a second sharing region on a display, the first sharing region being for sharing information with another user via the first character, and the second sharing region being for sharing information with another user via the second character.

7. The information processing apparatus according to claim 1, wherein the processor is further configured to:
display a sharing region for sharing information between users in the virtual space, on a display, and
a time at which the sharing region is available is limited by a reservation.

8. The information processing apparatus according to claim 7, wherein the processor is further configured to:
cause a user who uses the sharing region to automatically log in to the virtual space at a reserved time.

9. The information processing apparatus according to claim 8, wherein the processor is further configured to:
move the character to the sharing region in the virtual space after logging in.

10. The information processing apparatus according to claim 1, wherein the processor is further configured to:
display a sharing region for sharing information between users in the virtual space, on a display, and
the number of users capable of using the sharing region is limited by a reservation.

11. The information processing apparatus according to claim 1, wherein the processor is further configured to:
display a sharing region for sharing information between users in the virtual space, on a display, and
a sender who has sent information to be shared is notified of information on a sharer who has shared the information.

12. The information processing apparatus according to claim 1, wherein the processor is further configured to:
display a sharing region for sharing information between users in the virtual space, on a display, and
a period in which only acquisition of information through the sharing region is permitted is defined.

13. The information processing apparatus according to claim 1, wherein the processor is further configured to:
display a sharing region for sharing information between users in the virtual space, on a display, and
the number of times of sharing information through the sharing region is determined.

14. A program causing a computer to execute a process comprising:
changing control of a device disposed in a real space in accordance with a position of a character in a virtual space.

15. An information processing method comprising:
changing control of a device disposed in a real space in accordance with a position of a character in a virtual space.
